# EUROPEAN PATENT APPLICATION

(11) **EP 4 842 008 A1**
(43) Date of publication of application: **18.11.2026**
(21) Application number: 26173867.8
(22) Date of filing: 22.04.2026
(51) Int. Cl.: H04N 25/60, H04N 23/76, H04N 23/83, H04N 23/88, H04N 25/773

(54) **PHOTOELECTRIC CONVERSION APPARATUS, AND CONTROL METHOD OF PHOTOELECTRIC CONVERSION APPARATUS**

(30) Priority: 14.05.2025 JP 2025081393
(71) Applicant: Canon Kabushiki Kaisha, Tokyo 146-8501 (JP)
(72) Inventor: OHTAKE, Masaya, Ohta-ku, Tokyo, 146-8501 (JP)
(74) Representative: TBK

(57) **Abstract**

A photoelectric conversion apparatus (1000) including pixels (101), a timing controller (TC) and a processor (1007) is provided. The timing controller (TC) generates, in sub-frame periods forming a frame period, pulse signals defining detection periods forming sub-frame periods and a readout signal. Each of the pixels (101) includes a counting unit (520) configured to count the number of pulse signals and perform integration for each frame period. The timing controller (TC) supplies the readout signal at an end of the sub-frame period and a count result is read out. The processor (1007) performs correction based on the count result and changes a method of the correction in accordance with at least one of a generation timing of each of the pulse signals and a period length from a start of the frame period to the sub-frame period in which the count result is read out.

## Description

### TECHNICAL FIELD

The present disclosure relates to a photoelectric conversion apparatus, and a control method of the photoelectric conversion apparatus.

### Description of the Related Art

### BACKGROUND

There is known a photoelectric conversion apparatus capable of detecting faint light of single photon level using avalanche multiplication. US-2017-0186798 discloses a photoelectric conversion apparatus in which a sensor chip with a plurality of pixels arrayed and a circuit chip on which a circuit for performing signal processing is formed are stacked. In Japanese Patent Laid-Open Nos. 2025-009968 and 2025-009969, a weighting count operation for weighting and counting a signal detected by an avalanche photodiode is described. Japanese Patent Laid-Open No. 2021-153346 shows an advanced acquisition operation of outputting some video signals in advance before video signals of one frame are output.

### SUMMARY

Since the weighting count operation weights a coefficient based on the timing of photon incidence, a variation of the incident timing appears as image noise under a condition with little photon incidence. Also, in a case where the advanced acquisition operation is used, since the number of incident photons is smaller in the video signals output in advance than in the video signals of one frame, image noise is readily generated.

Some embodiments of the present disclosure provide a technique advantageous in correcting image noise.

The present disclosure in its first aspect provides a photoelectric conversion apparatus as specified in claim 1. Optional features are specified in claim 2 to 14.

The present disclosure in its second aspect provides a control method of a photoelectric conversion apparatus as specified in claim 15.

Features of the present disclosure will become apparent from the following description of embodiments with reference to the attached drawings. The following description of embodiments is described by way of example.

### BRIEF DESCRIPTION OF THE DRAWINGS

Fig. 1 is a view schematically showing an example of the configuration of a photoelectric conversion apparatus according to the embodiment;
Fig. 2 is a view schematically showing the configuration of a sensor substrate of the photoelectric conversion apparatus according to the embodiment;
Fig. 3 is a view schematically showing the configuration of a circuit substrate of the photoelectric conversion apparatus according to the embodiment;
Fig. 4 is a view showing an example of the configuration of a pixel according to the embodiment;
Figs. 5A and 5B are views for explaining a photon detection operation;
Figs. 6A and 6B are views for explaining weighting count;
Fig. 7 is a view showing an example of the configuration of a pixel according to the embodiment;
Fig. 8 is a timing chart showing an example of the operation of a pixel and a timing controller according to the embodiment;
Fig. 9 is a view showing an example of the configuration of a pixel according to the embodiment;
Fig. 10 is a timing chart showing an example of the operations of a pixel and a timing controller according to the embodiment;
Fig. 11 is a block diagram showing an example of the configuration of a photoelectric conversion apparatus and a moving body according to the embodiment;
Fig. 12 is a view for explaining a photoelectric conversion method of a camera controller according to the embodiment;
Fig. 13 is a view showing an example of a plurality of frame images according to the embodiment;
Fig. 14 is a view showing the relationship between memory circuits and buffers according to the embodiment;
Fig. 15 is a flowchart showing an example of driving of the photoelectric conversion apparatus according to the embodiment;
Fig. 16 is a flowchart showing an example of driving of the photoelectric conversion apparatus according to the embodiment;
Fig. 17 is a block diagram showing an example of the configuration of a photoelectric conversion apparatus according to the embodiment;
Fig. 18 is a block diagram for explaining functions in a processor according to the embodiment;
Fig. 19 is a view showing the relationship between the generation timings of a plurality of clock signals TCLK and weighting coefficients;
Figs. 20A and 20B are views showing an example of digital gain adjustment in a gain adjuster according to the embodiment;
Fig. 21 is a view showing an example of digital gain adjustment in the gain adjuster according to the embodiment;
Fig. 22 is a flowchart of gain adjustment according to the embodiment;
Figs. 23A and 23B are views for explaining the effect of the embodiment;
Fig. 24 is a view showing an example of an image signal in which dark part luminance noise is generated;
Fig. 25 is a view showing an example of change of reference pixels in a white adjuster according to the embodiment;
Fig. 26 is a flowchart of white balance adjustment according to the embodiment;
Fig. 27 is a view for explaining the effect of the embodiment;
Fig. 28 is a view showing the difference between images due to the difference of the period length of the exposure period of a sub-frame;
Fig. 29 is a view showing an example of change of a correction strength in a noise corrector according to the embodiment;
Fig. 30 is a flowchart of noise correction according to the embodiment;
Figs. 31A and 31B are views showing an example of change of correction tables in a gamma corrector according to the embodiment;
Fig. 32 is a flowchart of gamma correction according to the embodiment;
Figs. 33A and 33B are views showing an example of an image signal input to a compressor according to the embodiment;
Fig. 34 is a view showing an example of change of compression processing in the compressor according to the embodiment;
Fig. 35 is a flowchart of compression processing according to the embodiment;
Figs. 36A and 36B are views showing an example of a photoelectric conversion system using the photoelectric conversion apparatus according to the embodiment;
Fig. 37 is a view showing an example of a photoelectric conversion system using the photoelectric conversion apparatus according to the embodiment;
Fig. 38 is a view showing an example of a photoelectric conversion system using the photoelectric conversion apparatus according to the embodiment;
Figs. 39A and 39B are views showing an example of a photoelectric conversion system using the photoelectric conversion apparatus according to the embodiment;
Figs. 40A and 40B are views showing an example of a photoelectric conversion system using the photoelectric conversion apparatus according to the embodiment; and
Fig. 41 is a view showing an example of a photoelectric conversion system using the photoelectric conversion apparatus according to the embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

An embodiment of the present disclosure will now be described in detail with reference to the accompanying drawings. Note that in the following description, terms (for example, "upper", "lower", "right", "left" and other terms including these terms) representing specific directions or positions are used, as necessary. These terms are used for easy understanding of the embodiments with reference to the accompanying drawings, and the meanings of the terms do not limit the technical scope of the present disclosure.

In this specification, a planar view is viewing from a direction perpendicular to the light incident surface of a semiconductor layer. A sectional view indicates a plane in the direction perpendicular to the light incident surface of the semiconductor layer. Note that if the light incident surface of the semiconductor layer is rough microscopically, the planar view is defined with reference to the light incident surface of the semiconductor layer when viewed macroscopically.

In example to be described below, a detector that detects a photon is formed by an avalanche photodiode (APD), a fixed potential is given to the anode of the APD, and a signal is extracted from the cathode side. Hence, a semiconductor region of a first conductivity type containing, as a majority carrier, a charge of the same polarity as that of a signal charge is an n-type semiconductor region, and a semiconductor region of a second conductivity type containing, as a majority carrier, a charge of a polarity different from that of the signal charge is a p-type semiconductor region. Note that a fixed potential may be given to the cathode of the APD, and a signal may be extracted from the anode side. In this case, a semiconductor region of a first conductivity type containing, as a majority carrier, a charge of the same polarity as that of a signal charge is a p-type semiconductor region, and a semiconductor region of a second conductivity type containing, as a majority carrier, a charge of a polarity different from that of the signal charge is an n-type semiconductor region. Hereinafter, a case where one node of the APD is set to a fixed potential will be described, but the potentials of both nodes may vary.

In this specification, if a term "impurity concentration" is simply used, this means a net impurity concentration obtained by subtracting an impurity concentration compensated by impurities of an opposite conductivity type. That is, the "impurity concentration" indicates a NET doping concentration. A region where the concentration of added p-type impurities is higher than the concentration of added n-type impurities is a p-type semiconductor region. To the contrary, a region where the concentration of added n-type impurities is higher than the concentration of added p-type impurities is an n-type semiconductor region.

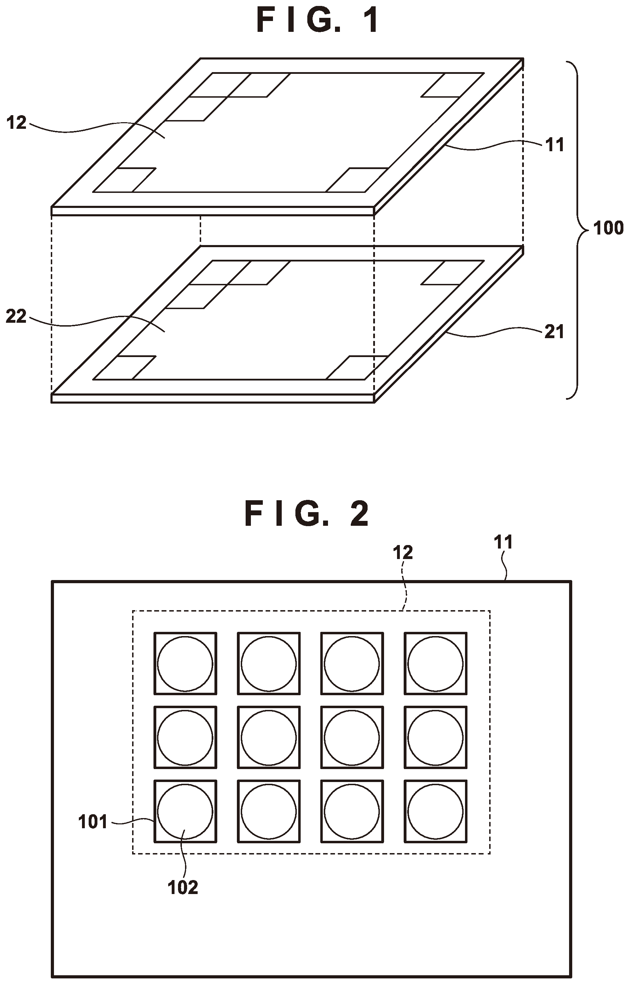

Fig. 1 schematically shows an example of the configuration of a photoelectric conversion device 100 used in a photoelectric conversion apparatus according to an embodiment of the present disclosure. The photoelectric conversion device 100 can have a structure in which, for example, a sensor substrate 11 and a circuit substrate 21 are stacked. The sensor substrate 11 can include, for example, a photoelectric conversion element array 12 including a plurality of photoelectric conversion elements (APDs). The circuit substrate 21 can include a processing circuit 22 that processes signals output from the plurality of photoelectric conversion elements.

Fig. 2 schematically shows an example of the configuration of the sensor substrate 11. The photoelectric conversion element array 12 of the sensor substrate 11 can include a plurality of photoelectric conversion elements 102 arranged to form a plurality of rows and a plurality of columns. Each photoelectric conversion element 102 is a constituent element of a detector that detects a photon, and is also a constituent element of a pixel 101. In the following explanation, the photoelectric conversion device 100 has an aspect as a part of an image capturing apparatus. However, the photoelectric conversion device 100 may be formed as a part of another apparatus. For example, the photoelectric conversion device 100 can be formed as a ranging apparatus (for example, a focus detection apparatus or a ranging apparatus using Time Of Flight (TOF)), a photometric apparatus (for example, an apparatus that measures an incident light amount), or the like. Note that the plurality of pixels 101 may be arranged linearly (one-dimensionally) and, in this case, the photoelectric conversion device 100 can form a line sensor.

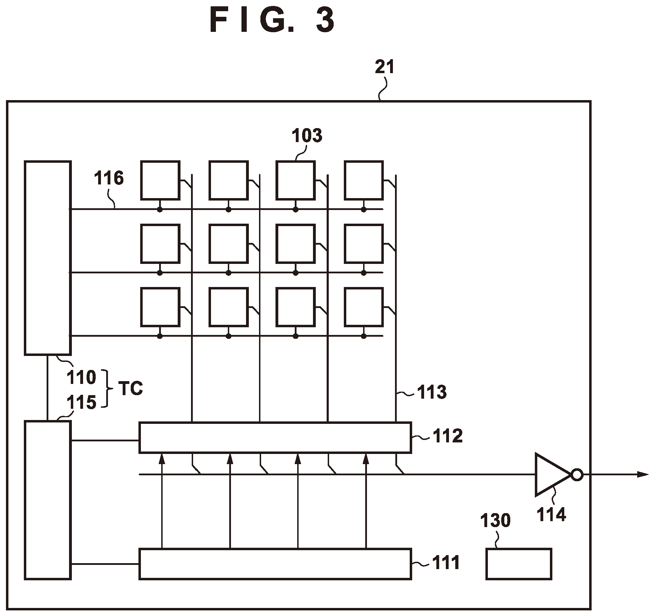

Fig. 3 schematically shows the configuration of the processing circuit 22 of the circuit substrate 21. The processing circuit 22 can include, for example, a pixel circuit array 120 including a plurality of pixel circuits 103, a readout circuit 112, a controller 115, a horizontal scanning circuit 111, a plurality of signal lines 113, a vertical scanning circuit 110, an output circuit 114, a setter 130, and the like. Each pixel circuit 103 forms the pixel 101 together with the photoelectric conversion element 102 corresponding to it, and processes a signal output from the photoelectric conversion element 102. One pixel circuit 103 may be provided in correspondence with one photoelectric conversion element 102, or one pixel circuit 103 may be provided in correspondence with two or more photoelectric conversion elements 102. Even in the latter case, it can be considered that each pixel 101 includes the photoelectric conversion element 102 and the pixel circuit 103. In an example, one photoelectric conversion element 102 and one pixel circuit 103 can electrically be connected by a connector. The photoelectric conversion element array 12 and the pixel circuit array 120 form a pixel array. The setter 130 can set the operation mode of the photoelectric conversion device 100 in accordance with, for example, an operation of a user or in accordance with an instruction from a controller (not shown).

The vertical scanning circuit 110 can sequentially select the plurality of rows of the photoelectric conversion element array 12 in accordance with, for example, a control signal supplied from the controller 115. The vertical scanning circuit 110 can include, for example, at least one of a shift register and an address decoder. The readout circuit 112 reads out signals output, via the plurality of signal lines 113, from the pixel circuits 103 corresponding to the pixels 101 of a row selected by the vertical scanning circuit 110. The horizontal scanning circuit 111 supplies, for example, the signals of one row read out by the readout circuit 112 to the output circuit 114 in a predetermined order.

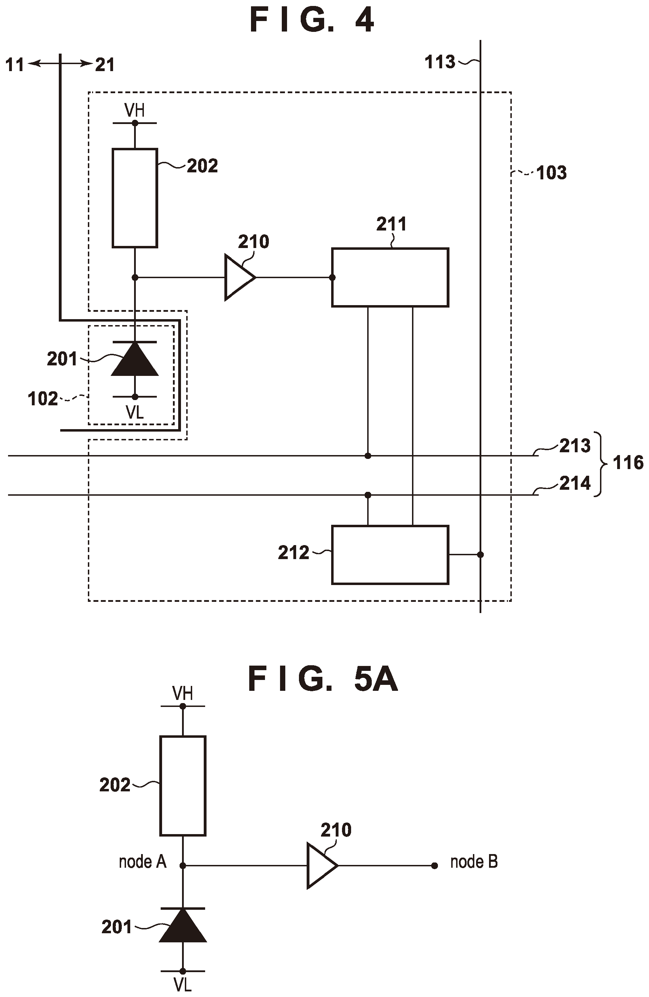

Fig. 4 shows an example of the configuration of one pixel 101 formed by the photoelectric conversion element 102 and the pixel circuit 103. In the example shown in Fig. 4, one pixel circuit 103 is assigned to one photoelectric conversion element 102. The photoelectric conversion element 102 includes an APD 201. At least one of the plurality of constituent elements of the pixel circuit 103 may be arranged on the sensor substrate 11. Alternatively, all the plurality of constituent elements of the pixel circuit 103 may be arranged on the sensor substrate 11.

The APD 201 generates a charge pair according to incident light by photoelectric conversion. A voltage VH can be applied to the cathode of the APD 201. A voltage VL is applied to the anode of the APD 201, and the voltage VH has a potential higher than the potential of the voltage VL. The potential difference between the voltage VH and the voltage VL is applied between the anode and cathode of the APD 201. The potential difference is a reverse bias voltage that causes the APD 201 to perform an avalanche multiplication operation. Charges generated by photons entering the APD 201 cause avalanche multiplication, thereby generating an avalanche current. A mode of applying a voltage higher than the breakdown voltage of the APD 201 between the anode and the cathode of the APD 201 is called a Geiger mode. A mode of applying a voltage around or lower than the breakdown voltage between the anode and the cathode of the APD 201 is called a linear mode. An APD operating in the Geiger mode is called an SPAD. In an example, the voltage VH is 1 V, and the voltage VL is -30 V.

The pixel circuit 103 can include a quenching element 202 connected between the cathode of the APD 201 and a terminal supplied with the voltage VH. The quenching element 202 may be understood as an element that supplies the voltage VH to the cathode of the APD 201. The quenching element 202 has a function of converting the change of the avalanche current generated in the APD 201 into a voltage signal. The quenching element 202 functions as a load circuit (quenching circuit) at the time of signal multiplication by avalanche multiplication, and serves to suppress avalanche multiplication by suppressing the voltage applied to the APD 201. This is known as a quenching operation.

The pixel circuit 103 can additionally include, for example, at least one of a waveform shaping circuit 210, a signal processing circuit 211, and a selection circuit 212. The waveform shaping circuit 210 can output a pulse signal by shaping the potential change of the cathode of the APD 201 at the time of detection of a photon. The waveform shaping circuit 210 can include, for example, an inverter circuit. In the example shown in Fig. 4, the waveform shaping circuit 210 is formed by one inverter, but the waveform shaping circuit 210 may be formed by series-connecting a plurality of inverters or by another circuit having the waveform shaping effect.

The signal processing circuit 211 can be configured to generate a count signal indicating the number of incident photons based on a pulse signal output from the waveform shaping circuit 210 and hold a count value. When a first control pulse of active level is supplied from the vertical scanning circuit 110 via a driving line 213, the count signal held in the signal processing circuit 211 can be reset. When a second control pulse of active level is supplied from the vertical scanning circuit 110 via a driving line 214, the selection circuit 212 can electrically connect the signal processing circuit 211 and the signal line 113. The selection circuit 212 can include, for example, a buffer circuit.

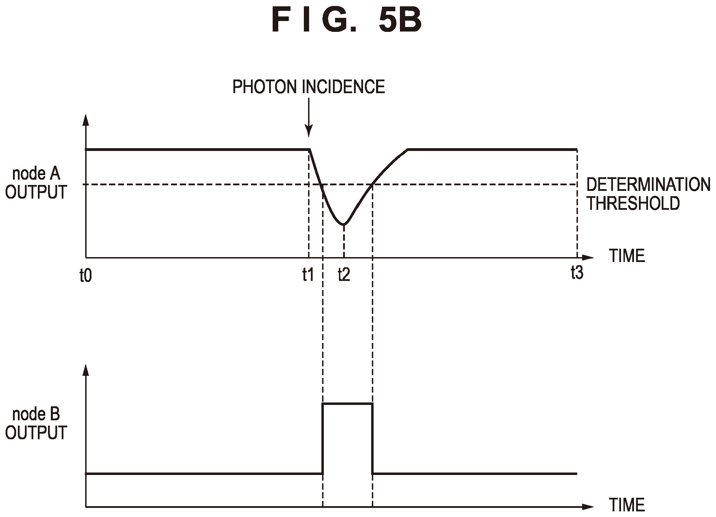

Figs. 5A and 5B are views for explaining a photon detection operation by the photoelectric conversion device 100. Fig. 5A is a view showing an excerpt of the APD 201, the quenching element 202, and the waveform shaping circuit 210 from Fig. 4. The input side of the waveform shaping circuit 210 is a node A and the output side is a node B. The upper side of Fig. 5B shows the waveform at the node A in Fig. 5A, and the lower side of Fig. 5B shows the waveform at the node B in Fig. 5A. From time t0 to time t1, the potential difference between VH and VL is applied to the APD 201. When a photon enters at time t1, avalanche multiplication occurs in the APD 201. This causes an avalanche multiplication current to flow into the quenching element 202, and the voltage (potential) of the node A drops. When the voltage drop amount increases and the potential difference applied to the APD 201 decreases, the avalanche multiplication of the APD 201 stops. After that, a current compensating for the voltage drop from the voltage VL flows into the node A, and the node A settles at the original potential level at time t3. At this time, a portion at which the output waveform exceeds a given threshold at the node A is waveform-shaped by the waveform shaping circuit 210 and a pulse signal appears at the node B.

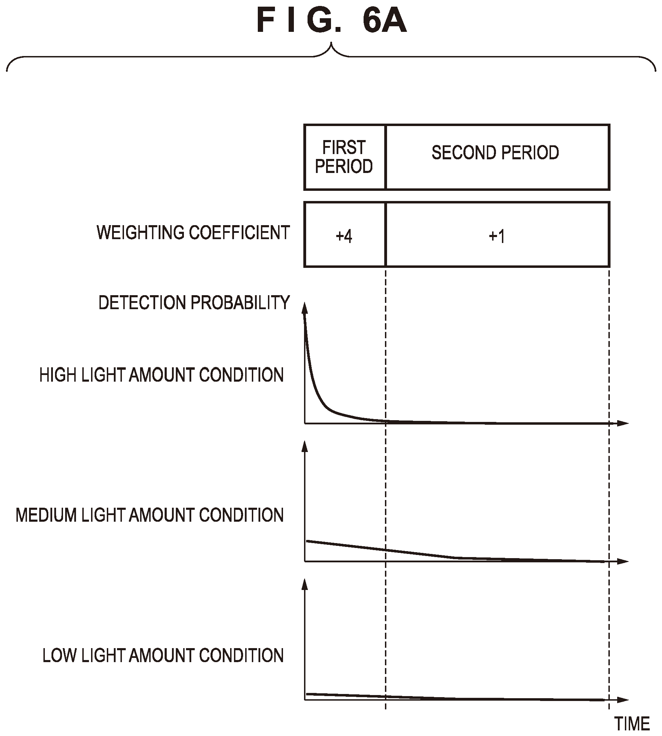

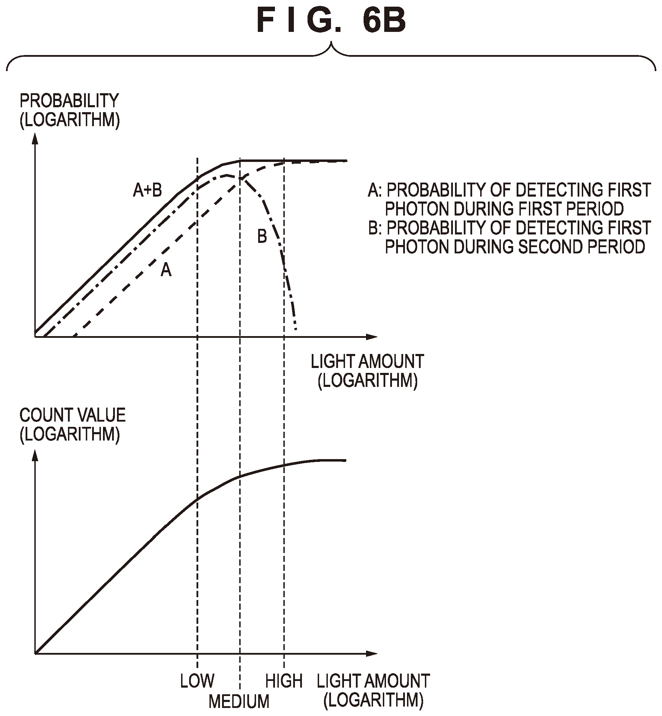

The principle of a weighting count operation according to the present disclosure will be described with reference to Figs. 6Aand 6B. Here, Fig. 6A is a view showing an example of the detection probability of a first photon with respect to time and a weighting coefficient in each period under each light amount condition. The upper view of Fig. 6B is a graph showing the probability of photon detection with respect to the light amount. The lower view of Fig. 6B is a graph showing the count number of photon detection signals with respect to the light amount. Here, a photon detected for the first time in each detection period is called a first photon. Note that in this specification, the light amount means an amount of light that enters (the pixel 101 of) the photoelectric conversion device 100 during a unit time.

As shown in Fig. 6A, under a high light amount condition, the probability of detecting the first photon is higher in an early part of the detection period and lowers along with the elapse of time. If the detection period is divided into a first period and a second period after the first period, under the high light amount condition, the probability of detecting the first photon is high during the first period. Under a medium light amount condition as well, the photon detection probability lowers along with the elapse of time. However, as compared to a case of high light amount, the time dependency of the detection probability of the first photon is low, and the first photon may be detected even during the second period. Under a low light amount condition, the detection probability of the first photon rarely depends on time.

On the upper side of Fig. 6B, a broken line A indicates the probability of detecting the first photon during the first period in each light amount, and an alternate long and short dashed line B indicates the probability of detecting the first photon during the second period in each light amount. A solid line (A + B) that is the sum of the broken line A and the alternate long and short dashed line B indicates the probability of detecting the first photon during the detection period in each light amount. As indicated by the broken line A, the larger the light amount is, the higher the probability of detecting the first photon during the first period is, and the probability saturates under the high light amount condition. Particularly, under the low to medium light amount conditions, the probability of detecting the first photon during the first period increases as a power with respect to the increase of the light amount. On the other hand, as indicated by the alternate long and short dashed line B, under the low to medium light amount conditions, the larger the light amount is, the higher the probability of detecting the first photon during the second period is, and the probability lowers under the medium to high light amount condition. This is because under the high light amount condition, the first photon is detected during the first period in many cases but it is a photon entering after the first photon that is detected in the second period. As for the probability of detecting the first photon in each light amount, as indicated by the solid line (A + B) that is the sum of the broken line A and the alternate long and short dashed line B, under the low to medium light amount conditions, the larger the light amount is, the higher the photon detection probability is, and the probability converges to a predetermined value under the medium to high light amount conditions.

On the lower side of Fig. 6B, a graph of the count value in each light amount is shown. Like the detection probability of the first photon shown on the upper side of Fig. 6B, the second and subsequent photons enter the APD. That is, under the low to medium light amount conditions, the larger the light amount is, the larger the count number of photons is. Under the medium to high light amount conditions, the count value saturates along with the increase of the light amount. Under the high light amount condition, the increase amount of the count value and the increase amount of the number of incident photons are not in a one-to-one correspondence, and it can be said that the weight of the count value per count increases. In other words, it can be said that under the low to medium light amount conditions, the expected value of the number of detected photons depends on the light amount, but under the medium to high light amount conditions, the weight of the count value depends on the light amount.

In the embodiment to be described below, a count operation is executed while changing the weighting in accordance with the timing of detecting a photon. In this embodiment, each frame period is divided into a plurality of sub-frame periods, and each sub-frame period is further divided into a plurality of detection periods. Each sub-frame period is also called a recharge period. One frame is one still image, and one frame period is a period to acquire one still image. For example, when still images of 30 frames are continuously reproduced, a moving image of one second is generated. By appropriately setting the number of sub-frame periods forming one frame period (in other words, the number of divisions of one frame period) and the weighting coefficient, improvement of Signal Noise Ratio (SNR) and expansion of the dynamic range can simultaneously be implemented.

In this embodiment, a plurality of recharge periods (exposure periods corresponding to sub-frames, also called sub-frame periods) obtained by dividing an exposure period (also called one frame period) corresponding to one frame are divided into, for example, three types, and three types of weighting coefficients are provided. The present disclosure is not limited to this, and two or more types of recharge periods suffice. Here, a frame is one still image and, for example, when still images of 30 frames are continuously reproduced, a moving image of one second is formed. By appropriately setting the number of divisions of a frame period and the weighting coefficients, improvement of SNR and expansion of the dynamic range can simultaneously be implemented.

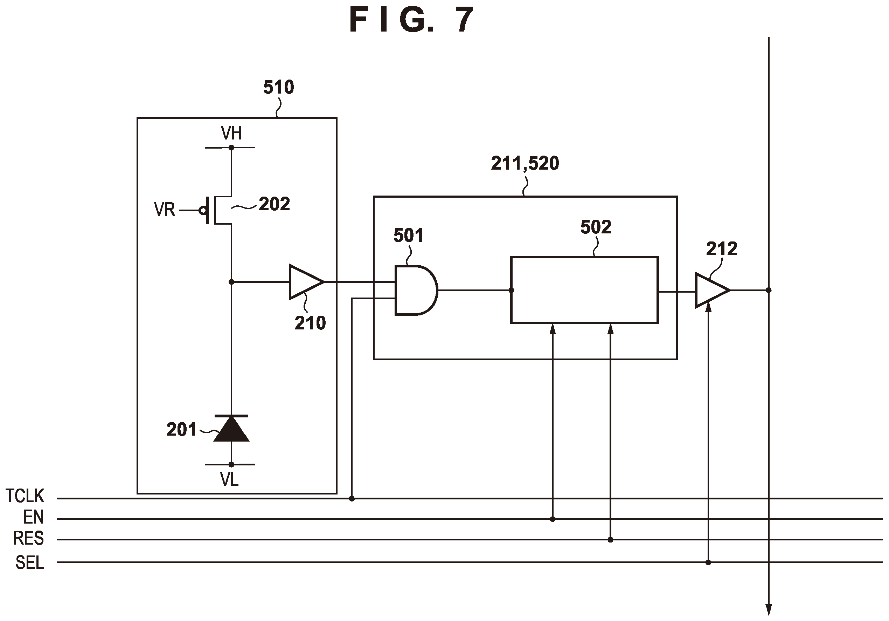

Fig. 7 shows an example of the configuration of one pixel 101 according to this embodiment. In the example shown in Fig. 7, the quenching element 202 is formed by a PMOS transistor, and the waveform shaping circuit 210 is formed by an inverter. The APD 201, the quenching element 202, and the waveform shaping circuit 210 can form a detector 510 that detects a photon. The signal processing circuit 211 can form a counting unit 520 that adds, to an integrated value, a weight value according to a detection period in which a photon is detected by the detector 510 among a plurality of detection periods in each of a plurality of sub-frame periods that form each frame period. As will be described later, the counting unit 520 counts the number of pulse signals after first photon detection among a plurality of pulse signals output from the waveform shaping circuit 210 in each sub-frame period and integrates the number on a frame period basis. The counting unit 520 can include a counter 502 and a counter controller 501 that controls the counter 502. The counter controller 501 can be formed by, for example, an AND circuit. The output signal from the waveform shaping circuit 210 is input to one of the two input terminals of the AND circuit that forms the counter controller 501, and a clock signal TCLK can be input to the other input terminal.

In addition to the clock signal TCLK, an enable signal EN, a reset signal RES, and a selection signal SEL can be supplied from the vertical scanning circuit 110 to the pixel 101. The clock signal TCLK, the enable signal EN, and the reset signal RES may be supplied from the controller 115. The vertical scanning circuit 110 and the controller 115 can form a timing controller TC that generates a timing to control the operation of the plurality of pixels 101, as shown in Fig. 3. The timing controller TC may drive the plurality of pixels 101 by a global shutter method, or may drive the plurality of pixels 101 by a rolling shutter method. In the global shutter method, the exposure period to detect a photon is common to the plurality of pixels 101, and in the rolling shutter method, the exposure period to measure the number of photons entering each pixel 101 changes between rows.

The timing controller TC can make each of the clock signal TCLK, the enable signal EN, the reset signal RES, and the selection signal SEL transition at a timing according to the operation mode set by the setter 130. Also, the timing controller TC can decide, in accordance with the set operation mode, one or both of the number of sub-frame periods forming each frame period and a weight value according to the detection period in which a photon is detected among a plurality of detection periods.

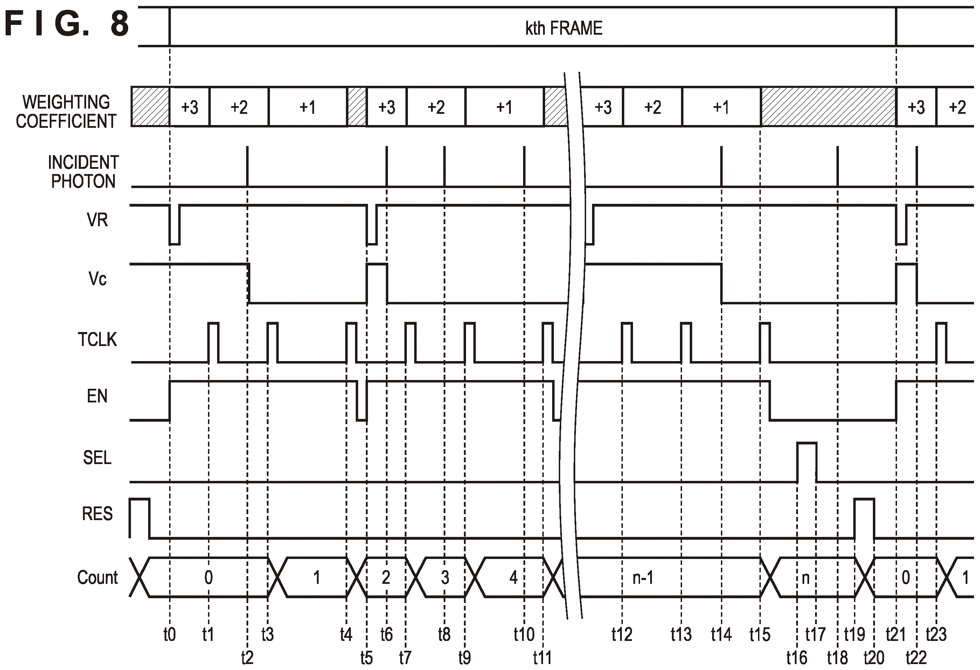

Fig. 8 shows an example of the operation of the pixel 101 and the timing controller TC (the vertical scanning circuit 110 and the controller 115) according to this embodiment. Hereinafter, that the logic level of a signal is low level is expressed as L, and that the logic level of a signal is high level is expressed as H. As described above, each frame period includes a plurality of sub-frame periods (recharge periods). In Fig. 8, for example, the period from time t0 to time t5 is one sub-frame period (recharge period). The timing controller TC defines, by the clock signal TCLK, a plurality of detection periods (in the example of Fig. 8, three detection periods) forming each sub-frame period. The clock signal TCLK has an aspect of a signal including a plurality of pulse signals that define a plurality of detection periods, and the intervals between the plurality of pulse signals can be non-equal intervals in each sub-frame and can, for example, monotonically decrease. The first detection period is a period in which the weighting coefficient is expressed as "+3", the second detection period is a period in which the weighting coefficient is expressed as "+2", and the third detection period is a period in which the weighting coefficient is expressed as "+1". The clock signal TCLK is also a signal that causes the counter 502 to perform a count operation in a period in which a voltage Vc of the output node of the APD 201 is at L (a period in which the output of the waveform shaping circuit 210 is at H).

If a photon is detected by the detector 510 in the first detection period ("+3"), Vc changes to L (the output of the waveform shaping circuit 210 changes to H) and, after that, the clock signal TCLK changes to H three times. In response to this, the counter 502 performs the count operation three times, and a value "3" according to the first detection period is thus added to a counted value (0 immediately after reset by the reset signal RES) that is a count value Count of the counting unit 520. If a photon is detected by the detector 510 in the second detection period ("+2"), Vc changes to L (the output of the waveform shaping circuit 210 changes to H) and, after that, the clock signal TCLK changes to H twice. In response to this, the counter 502 performs the count operation twice, and a value "2" according to the second detection period is thus added to the counted value that is the count value Count of the counting unit 520. If a photon is detected by the detector 510 in the third detection period ("+1"), Vc changes to L (the output of the waveform shaping circuit 210 changes to H) and, after that, the clock signal TCLK changes to H only once. In response to this, the counter 502 performs the count operation only once, and a value "1" according to the third detection period is thus added to the counted value that is the count value Count of the counting unit 520. As described above, the method of adding a weight value according to the detection period in which a photon is detected by the detector 510 among a plurality of detection periods in each sub-frame period is called weighted addition.

The operation from time t0 will exemplarily be described below. The timing at which a photon enters is exemplified as "incident photon", and the operation exemplified in Fig. 8 depends on the timing at which a photon enters. At time t0, the logic level of the enable signal EN transitions from L to H. Thus, the exposure period in the kth frame period starts. Also, at time t0, the logic level of a clock signal VR changes to L and then immediately returns to H. Thus, the quenching element 202 is turned on and Vc is reset (recharged). At time t1, the logic level of the clock signal TCLK changes to H. The clock signal TCLK is a signal that defines the timing to change the weighting coefficient (in other words, the detection period) and is also a signal that causes the counter 502 to perform the count operation in the period in which Vc is at L (the period in which the output of the waveform shaping circuit 210 is at H).

At time t1, since Vc is at H (the output of the waveform shaping circuit 210 is at L), even if the clock signal TCLK changes to H, the counter 502 does not perform the count operation. At time t2, a photon enters the APD 201. Thus, the level of the output signal Vc changes to L, and the logic level of the output of the waveform shaping circuit 210 changes to H. At time t3, if the level of the clock signal TCLK changes to H, the logic level of the output of the AND circuit serving as the counter controller 501 changes to H. Hence, the counter 502 performs the count operation, and 1 is added to the counted value that is the count value Count. At time t4, the level of the clock signal TCLK changes to H again, and the logic level of the output of the AND circuit serving as the counter controller 501 thus changes to H. Hence, the counter 502 performs the count operation, and 1 is added to the counted value that is the count value Count. That is, 2 is added as the weight value to the counted value that is the count value Count in the period from time t1 to time t4. In other words, 2 is added as the weight value to the counted value that is the count value Count in the sub-frame period.

In the period from time t4 to time t5, the logic level of the enable signal EN changes to L. The counter 502 is thus controlled to a disable state. A photon that enters the APD 201 during this period is not detected. The period from time t1 to time t5 is one sub-frame period, and a new sub-frame period starts from time t5.

In the sub-frame period starting from the time t5, a photon enters the APD 201 at time t6, in response to this, the level of the output signal Vc changes to L, and the logic level of the output of the waveform shaping circuit 210 changes to H. At times t7, t9, and t11, the level of the clock signal TCLK changes to H, the counter 502 performs the count operation every time, and 3 is added in total to the counted value that is the count value Count. That is, in the period from time t5 to time t11, 3 is added to the counted value that is the count value Count. In other words, in the sub-frame period, 3 is added as the weight value to the counted value that is the count value Count.

In the period from time t16 to time t17, the selection signal SEL changes to H. Thus, the selection circuit 212 outputs an integrated value held in the signal processing circuit 211 to the output line. At time t18, a photon enters the APD 201, but since the logic level of the enable signal EN is L, a signal based on the photon is not counted. In the period from time t19 to time t20, the level of the reset signal RES changes to H, and the signal held in the signal processing circuit 211 is reset. At time t21, the enable signal EN transitions from L to H, and the exposure period in the (k+1)th frame period starts.

As described above, the counting unit 520 adds, to the counted value (count value), a weight value according to the detection period in which a photon is detected by the detector among a plurality of detection periods in each of a plurality of sub-frame periods. In the above-described example, the addition of the weight value according to the detection period in which a photon is detected by the detector among the plurality of detection periods is given by the number of clock signals TCLK that are pulse signals. However, instead of this, for example, the weight value according to the detection period in which a photon is detected by the detector among the plurality of detection periods may be given from the timing controller TC to the counting unit 520, and the counting unit 520 may add the weight value to the counted value. The number of detection periods forming each sub-frame is not limited to 3, and can be an arbitrary number of 2 or more. The weight value according to the detection period in which a photon is detected by the detector among the plurality of detection periods may be an arbitrary value.

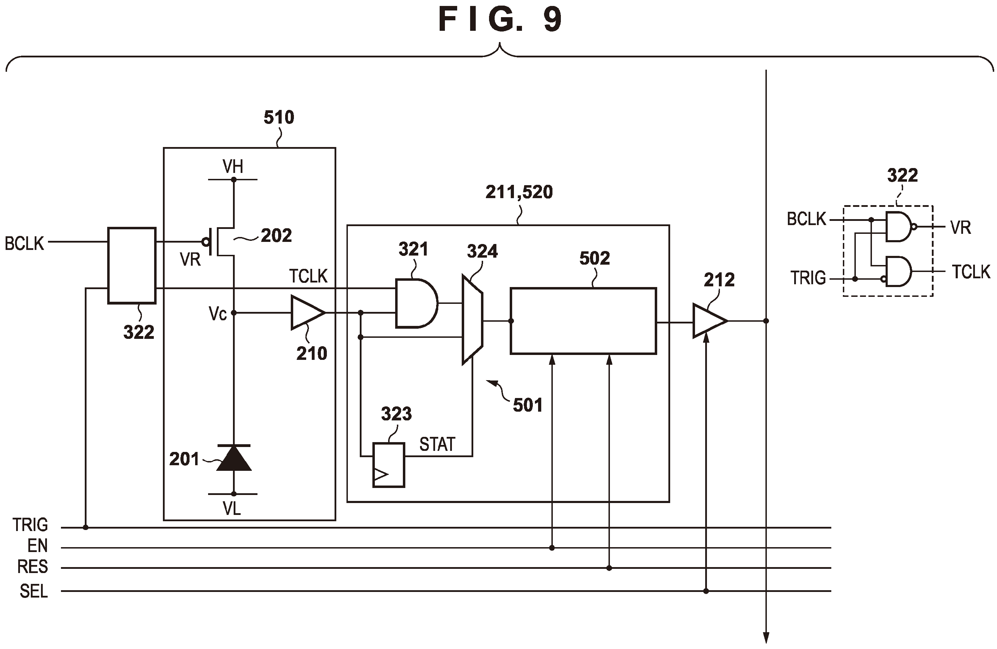

Fig. 9 shows an example of the configuration of one pixel 101, which is a modification of the pixel 101 shown in Fig. 7. In the configuration shown in Fig. 9, a control circuit 322 is added, and the components of the counter controller 501 are changed, as compared to the configuration shown in Fig. 7. In the configuration shown in Fig. 9, the counter controller 501 includes an AND circuit 321, a D flip flop 323, and a multiplexer 324. The AND circuit 321 has the same function as the counter controller 501 shown in Fig. 7. The D flip flop 323 holds information indicating whether a photon is detected in the immediately preceding sub-frame period (recharge period). The multiplexer 324 selects the output of the AND circuit 321 or the output of the waveform shaping circuit 210 in accordance with a signal STAT indicating the information held by the D flip flop 323 and provides it to the counter 502. If the D flip flop 323 indicates that no photon is detected in the immediately preceding sub-frame period, in the current sub-frame period, weighted addition is not performed even if Vc changes to L upon incidence of a photon, and only 1 is always added. With this configuration, possibility that noise is counted as a photon detection result is reduced. It is therefore possible to suppress statistical dispersion of the integrated value and, in particular, improve SNR under a low light amount condition.

Here, a clock signal BCLK is a clock signal used to generate the clock signal VR and the clock signal TCLK. In addition, a trigger signal TRIG is a pulse signal for selectively generating the clock signal VR and the clock signal TCLK from the clock signal BCLK. The clock signal BCLK and the trigger signal TRIG can be generated by the timing controller TC. If the pulse of the clock signal BCLK is input when the logic level of the trigger signal TRIG is H, the clock signal VR is generated as a pulse of negative logic. If the pulse of the clock signal BCLK is input when the logic level of the trigger signal TRIG is L, the clock signal TCLK is generated as a pulse of positive logic.

The clock signal VR and the clock signal TCLK can be generated using the common clock signal BCLK. In this case, as compared to a case where the clock signal VR and the clock signal TCLK are transmitted via different signal lines, the influence of skew or the like can be reduced. Particularly, degradation of image quality is unlikely to occur even if the number of pixels is large (for example, 1,000,000 or more pixels).

The control circuit 322 can be formed by, for example, a combination of a NAND circuit and an AND circuit. The clock signal BCLK and the trigger signal TRIG can be input to the input terminals of the NAND circuit. In addition, the clock signal BCLK and the inverted signal of the trigger signal TRIG can be input to the input terminals of the AND circuit.

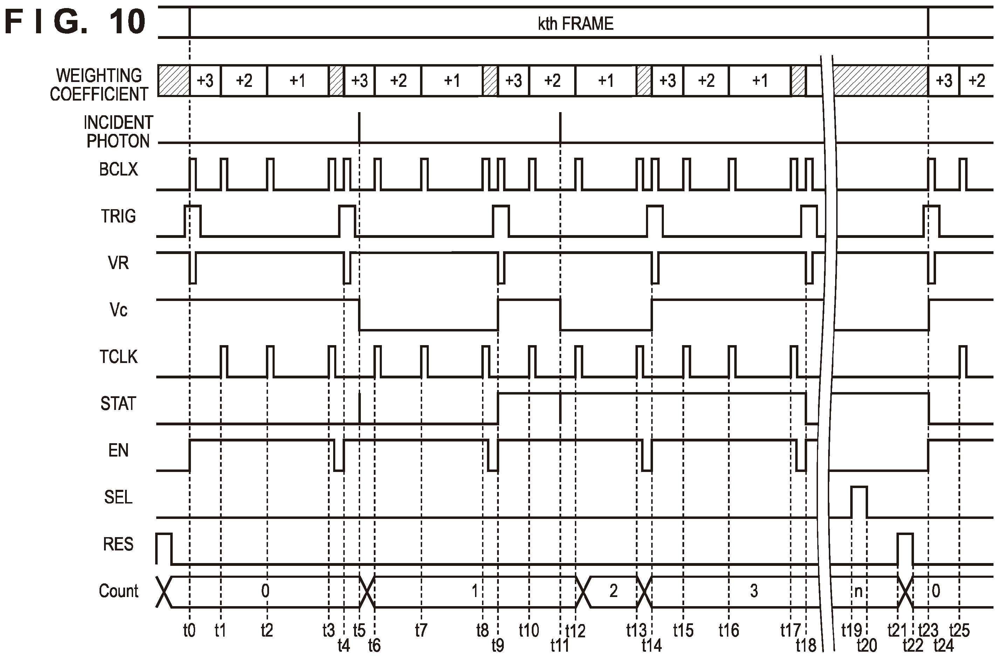

Fig. 10 shows an example of the operation of the pixel 101 having the configuration shown in Fig. 9 and the timing controller TC (the vertical scanning circuit 110 and the controller 115). The D flip flop 323 sets the logic level of the signal STAT to H if a photon is detected in the immediately preceding sub-frame period, and sets the logic level of the signal STAT to L if no photon is detected. If the logic level of the signal STAT is L and a photon is detected in the current sub-frame, the count operation is performed only once in the sub-frame period regardless of which of the plurality of detection periods is the detection period in which the timing is included, and only 1 is added to the counted value (count value Count). If the logic level of the signal STAT is H and a photon is detected in the current sub-frame, one of 1, 2, and 3 is added as a weight value to the counted value (count value Count) in accordance with which of the plurality of detection periods is the detection period to which the timing belongs.

At time t0, the logic level of the enable signal EN transitions from L to H. Thus, the exposure period in the kth frame period starts. In the period from time t0 to time t4, no photon is detected. In the sub-frame period from time t4, the signal STAT changes to L. At time t5, a photon enters. Since the logic level of the signal STAT is L, the count operation is performed only once at the same time as the occurrence of a photon detection event, and 1 is added as the weight value to the counted value (count value Count).

In the sub-frame period from time t9 to time t14, since a photon is detected in the immediately preceding sub-frame period (the period from time t4 to time t9), the signal STAT changes to H. At time t11, a photon enters. Since the logic level of the signal STAT is H, the count operation is performed at time t12 when the clock signal TCLK rises and at time t13, and in the sub-frame period, 2 is added as the weight value to the counted value (count value Count).

In the sub-frame period from time t14 to time t18, since a photon is detected in the immediately preceding sub-frame period (the period from time t9 to time t14), the logic level of the signal STAT remains H. From then on, in each sub-frame period, if a photon is detected in the immediately preceding sub-frame period, the logic level of the signal STAT is H, and if no photon is detected in the immediately preceding sub-frame period, the level of the signal STAT changes to L.

At time t23, the enable signal EN transitions from L to H. The exposure period in the (k+1)th frame period thus starts. The logic level of the signal STAT may forcibly be set to L in accordance with switching of the frame period. The level of the signal STAT in the first sub-frame period of the (k+1)th frame period may be decided in accordance with the photon detection result in the final sub-frame period of the kth frame period.

In this embodiment, weighting count is controlled depending on whether a photon is detected in the immediately preceding sub-frame period, but the present disclosure is not limited to this. For example, weighting count may be controlled depending on whether a photon is detected in a sub-frame period two or more periods ago. Weighting count may be controlled depending on whether a photon is detected in a plurality of past sub-frame periods.

Here, the control circuit 322 may be provided for each pixel or may be provided commonly for a plurality of pixels.

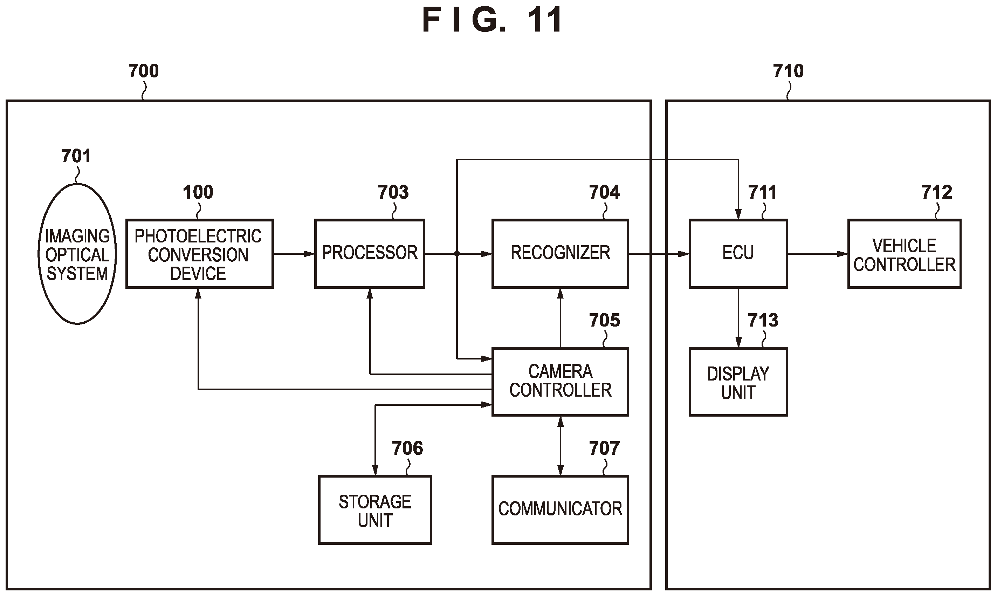

An advanced acquisition operation of outputting some video signals in advance before video signals of one frame are output will be described. Fig. 11 is a functional block diagram of a photoelectric conversion apparatus 700 and a moving body 710 according to this embodiment. Here, some of the functional blocks shown in Fig. 11 can be implemented by causing computers (not shown) provided in the photoelectric conversion apparatus 700 and the moving body 710 to execute a computer program stored in a memory that is a storage medium (not shown).

However, some or all of these may be implemented by hardware. As the hardware, a dedicated circuit (ASIC) or a processor (reconfigurable processor or DSP) can be used. Also, the functional blocks shown in Fig. 11 may not be incorporated in the same housing and may be formed by separate apparatuses connected via signal paths.

The photoelectric conversion apparatus 700 can include the above-described photoelectric conversion device 100, an imaging optical system 701, a processor 703, a recognizer 704, a camera controller 705, a storage unit 706, a communicator 707, and the like. The pixel 101 arranged in the photoelectric conversion device 100 is configured to include an APD for photoelectrically converting an optical image, as described above.

The photoelectric conversion apparatus 700 according to this embodiment is mounted in the moving body 710, and a camera unit including a set of the imaging optical system 701 and the photoelectric conversion device 100 is configured to capture, for example, at least one direction of the front, rear, and lateral sides of the moving body. A plurality of camera units may be provided in the moving body 710.

The processor 703 performs correction processing for an image signal based on the count result of counting by the counting unit 520 of the photoelectric conversion device 100. The correction processing can be, for example, image processing such as black level correction, gamma curve adjustment, noise reduction, digital gain adjustment, demosaic processing, and data compression. The processor 703 can thus generate final image signal data. If the photoelectric conversion device 100 includes an on-chip color filters such as RGB filters, the processor 703 may perform processing such as white balance correction and color conversion.

The output of the processor 703 is supplied to the recognizer 704, an Electronic Control Unit (ECU) 711 of the moving body 710, and the camera controller 705. The recognizer 704 performs image recognition based on the image signal data, thereby recognizing persons and vehicles on the periphery and generating a warning as needed.

In this embodiment, a description will be made using an example in which the moving body 710 is an automobile. However, the present disclosure is not limited to this, and the moving body 710 can be any of an aircraft, a train, a ship, a drone, an AGV, and a robot if it can move.

The camera controller 705 incorporates a CPU that is a computer and a memory that stores a computer program, and the CPU executes the computer program stored in the memory, thereby controlling the units of the photoelectric conversion apparatus 700.

Note that the camera controller 705 has a control function and controls the length of the exposure period of each frame of the photoelectric conversion device 100 or the timing of a control signal CLK via, for example, the control pulse generator of the photoelectric conversion device 100.

The storage unit 706 includes, for example, a recording medium such as a memory card or a hard disk, and can store and read out an image signal. The communicator 707 includes a wireless or wired interface, and outputs a generated image signal to the outside of the photoelectric conversion apparatus 700 and receives various kinds of signals from the outside.

The ECU 711 incorporates a CPU that is a computer and a memory that stores a computer program. In the ECU 711, the CPU executes the computer program stored in the memory, thereby controlling the units of the moving body 710.

The output of the ECU 711 is supplied to a vehicle controller 712 and a display unit 713. The vehicle controller 712 performs drive, stop, and direction control of the vehicle that is a moving body based on the output of the ECU 711. The display unit 713 includes, for example, a display element such as a liquid crystal device or an organic EL device and is mounted in the moving body 710.

Based on the output of the ECU 711, the display unit 713 displays an image acquired using the photoelectric conversion device 100 or various kinds of information concerning the traveling state of the vehicle to the operator of the moving body 710 using, for example, a GUI.

The processor 703 and the recognizer 704 shown in Fig. 11 may not be mounted in the moving body 710. For example, the processor 703, the recognizer 704, and the like may be provided in an external terminal that is provided independently of the moving body 710 and configured to remote-control the moving body 710 or monitor traveling of the moving body 710.

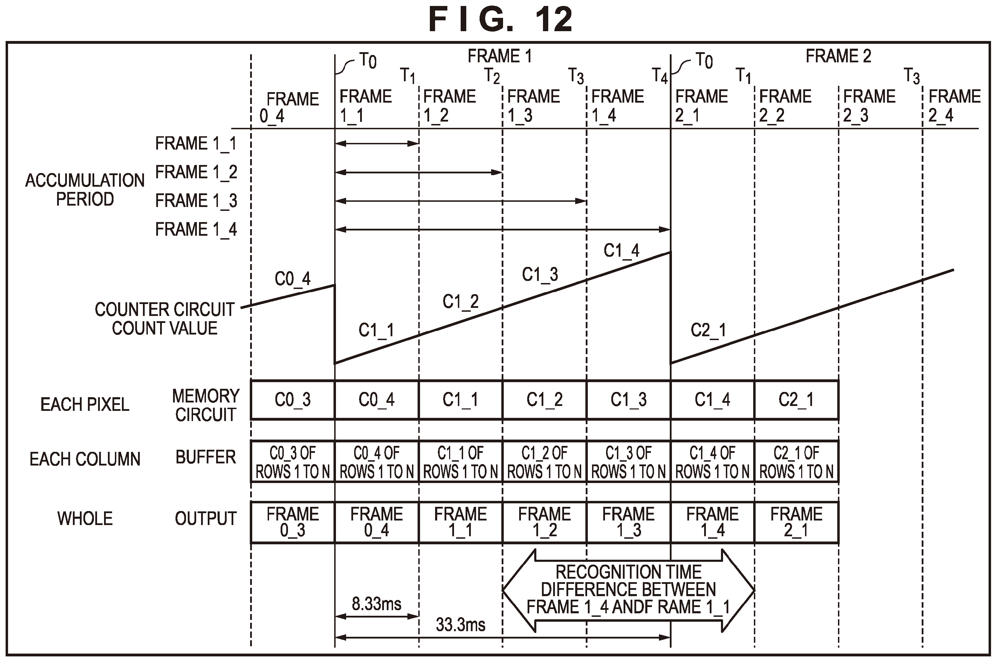

Fig. 12 is a view for explaining a photoelectric conversion method by the camera controller 705 according to this embodiment. In this embodiment, one frame having a length of 33.3 ms is divided into four parts. That is, as shown in Fig. 12, frame 1 is divided into frames 1_1, 1_2, 1_3, and 1_4 of equal periods (8.33 ms).

The frame 1_1 has an accumulation period from start time T0 of the frame 1 to time T1, and the frame 1_2 has an accumulation period from time T0 to time T2. The frame 1_3 has an accumulation period from time T0 to time T3, and the frame 1_4 has an accumulation period from time T0 to time T4.

The timing controller TC (the vertical scanning circuit 110 and the controller 115) resets the signal processing circuit 211 at time T0. Furthermore, the timing controller TC acquires count values C1_1, C1_2, C1_3, and C1_4 from the signal processing circuit 211 at times T1 to T4, respectively.

The count values C1_1, C1_2, C1_3, and C1_4 are temporarily stored in a memory circuit provided in the pixel circuit 103. The memory circuit may be arranged in, for example, the selection circuit 212. The signals of one row temporarily stored in the memory circuit are sequentially output from the photoelectric conversion device 100 via the buffer of the readout circuit 112. The timing controller TC is configured to be able to supply a readout signal for reading out signals from the plurality of pixels 101 (pixel circuits 103) at the end of each sub-frame period, and the count result of counting by the counting unit 520 is read out to the processor 703 in accordance with the readout signal.

As described above, according to this embodiment, the count result accumulated during the period of the frame 1_1 is read out from time T1 to time T2 and quickly processed by the recognizer 704. It is therefore possible to quickly perform image recognition. Similarly, the signals accumulated during the periods of the frames 1_2, 1_3, and 1_4 are sequentially read out from time T2 to time T3, from time T3 to time T4, and from time T4 to time T1, respectively, and image recognition can repeatedly be performed.

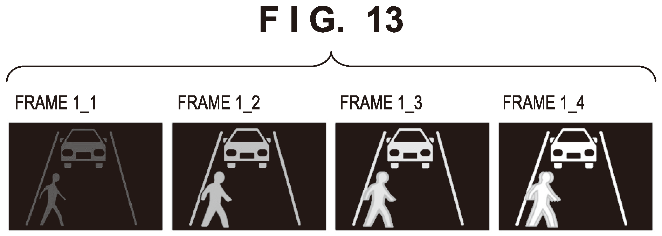

Fig. 13 is a view showing an example of a plurality of divided frame images. As shown in Fig. 13, the image of the frame 1_1 is dark because of the short accumulation period, but the subject blur of the person who has rushed out is little. On the other hand, since the accumulation period becomes long in the order of frames 1_2, 1_3, and 1_4, the subject blur of the person who has rushed out readily occurs. In this case, the subject blur rarely occurs for a stopped vehicle or a white line, and the longer the accumulation period is, the more the contrast readily improves.

As described above, in this embodiment, one frame has a first accumulation period (the period of the frame 1_1) and a second accumulation period (the period of the frame 1_4). At this time, the first accumulation period is shorter than the second accumulation period, and a signal generated in the first accumulation period is output during the time from the end of the first accumulation period to the end of the second accumulation period.

Additionally, in this embodiment, the first accumulation period and the second accumulation period include an overlap period, and the first accumulation period and the second accumulation period are simultaneously started. Furthermore, the end of the second accumulation period is the timing of the end of the sub-frame. In this embodiment, the second accumulation period is an integer multiple of the first accumulation period, but the second accumulation period need not be an integer multiple of the first accumulation period. It suffices that the second accumulation period is longer than the first accumulation period (the first accumulation period is shorter than the second accumulation period) and the end of the second accumulation period is later than the end of the first accumulation period.

An image of a short accumulation period and an image of a long accumulation period are generated, the timing of ending the short accumulation period is set before the timing of ending the long accumulation period, and as soon as the short accumulation period ends, the image signal data is output from the photoelectric conversion device 100 and sent to the recognizer 704 at the subsequent stage. Then, recognition of a subject is performed based on at least the signal generated in the first accumulation period. The recognizer 704 recognizes the subject based on at least the signal generated in the first accumulation period.

Hence, if image signal data is output for each frame, image recognition can be performed only on a frame period basis. In this embodiment, however, image recognition can be performed after a 1/4 frame period at the shortest. Thus, for example, if the moving body 710 is moving at a high speed, an obstacle or the like can quickly be recognized. For example, it is possible to quickly apply the brake. In addition, for example, the obstacle can be avoided in an early stage.

In the image of the long accumulation period, the contrast can be improved. For this reason, the image can be used as a display image to be displayed on the display unit 713. That is, the image of the short accumulation period is suitable for quick subject recognition, and the image of the long accumulation period is suitable for a display image.

Also, in this embodiment, since the APD 201 is used as the photoelectric conversion element 102 arranged in the pixel 101, the accumulated charges are never deteriorated by reading out a signal, unlike a CMOS sensor. Hence, the accumulation periods can overlap, as described above. Since no readout noise derived from readout of an analog signal occurs, the original signal does not deteriorate even if signal readout is performed a plurality of times in one frame.

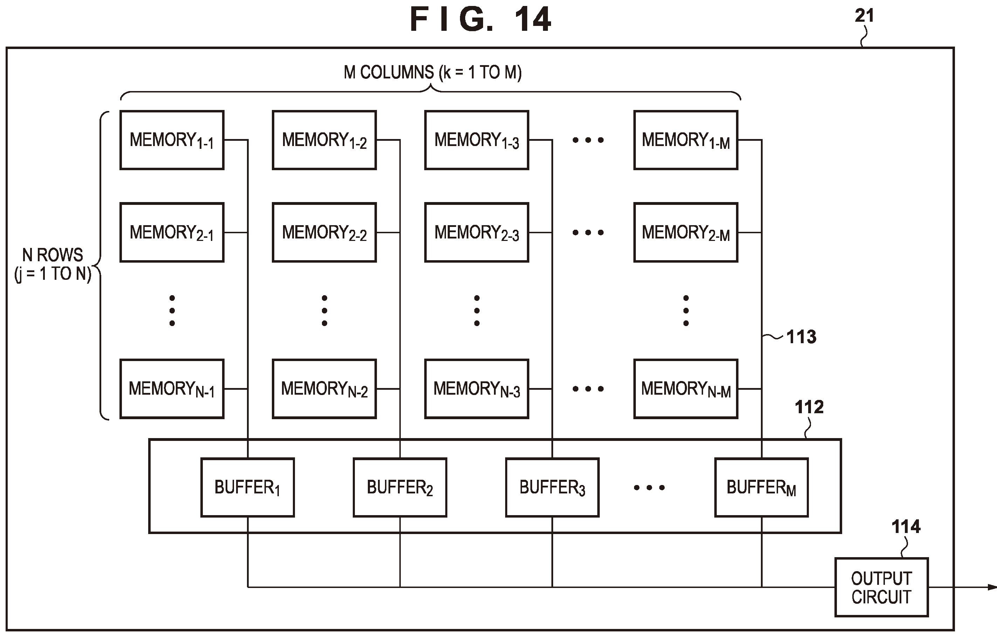

Fig. 14 is a view showing the relationship between memory circuits and buffers according to this embodiment. Fig. 14 shows a state in which N rows × M columns of memory circuits are arranged in the pixel circuits 103 shown in Fig. 3. The memory circuits are expressed as memories 1-1 to N-M. Also, buffers 1 to M shown in Fig. 14 indicate buffers arranged in the readout circuit 112 shown in Fig. 3. The output circuit 114 shown in Fig. 14 corresponds to the output circuit 114 shown in Fig. 3.

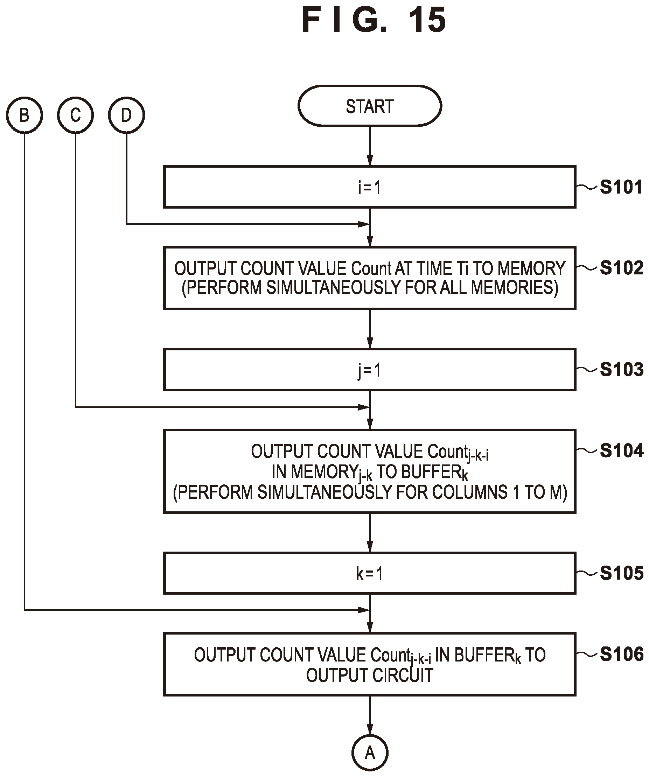

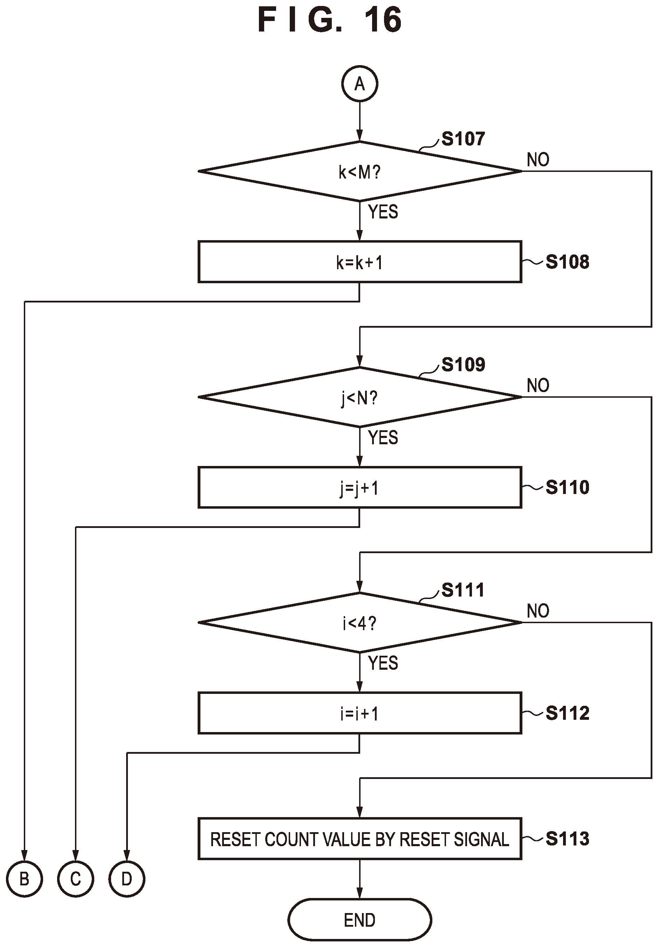

Figs. 15 and 16 are flowcharts showing the details of an example of driving of the photoelectric conversion apparatus 700 according to this embodiment. For example, a CPU that is a computer in the camera controller 705 executes a computer program stored in the memory. The operations of the steps of the flowcharts shown in Figs. 15 and 16 are thus sequentially performed.

In step S101 of Fig. 15, i = 1 is set. Next, in step S102, the count value Count in the signal processing circuit 211 at time Ti is output to the memory circuits arranged in the pixel circuits 103. At this time, the output is simultaneously done for all memory circuits. This operation corresponds to the operation at time T1 shown in Fig. 12.

Next, in step S103, j = 1 is set, and in step S104, a count value Count(j-k-i) in a memory circuit j-k shown in Fig. 14 is output to a buffer. At this time, count values in the first to Mth columns are simultaneously output to the buffers. This operation means an operation of receiving the counted values of the first row in Fig. 14 to the buffers.

Next, in step S105, k = 1 is set, and in step S106, the count value Count(j-k-i) in a buffer k is output to the output circuit 114. This operation corresponds to an operation of reading out the signal in the buffer of the leftmost column in Fig. 14 from the output circuit.

Next, the process advances to step S107 shown in Fig. 16, and in step S107, it is determined whether k < M. If NO in step S107, in step S108, k = k + 1 is set to increment k by one, and the process returns to step S106. This operation corresponds to an operation of reading out the signal in the buffer of the second column from the left side in Fig. 14 from the output circuit.

If NO in step S107, that is, if k = M, this means that reading out the signal in the buffer of the Mth column in Fig. 14 from the output circuit is ended. Next, the process advances to step S109 to determine whether j < N. If YES in step S109, in step S110, j = j + 1 is set to increment j by one, and the process returns to step S104. This corresponds to an operation of starting readout of the next row.

If NO in step S109, this means that readout of all rows is ended. Hence, the process advances to step S111 to determine whether j < 4. If YES in step S111, i = i + 1 is set to increment i by one, and the process returns to step S102. This operation corresponds to an operation of starting the next readout at time T2.

If NO in step S111, this means that readout at time T4 is completed. Hence, the process advances to step S113, and the signal processing circuit 211 is reset by a reset signal. This operation corresponds to the reset operation of the signal processing circuit 211 at time T4 in Fig. 12. In the above-described way, the signals accumulated in the photoelectric conversion device 100 can sequentially be read out.

In this embodiment, in one frame period, a counted value is read out in an accumulation period corresponding to a 1/4 frame period at the shortest. However, the present disclosure is not limited to this, and the length of the shortest accumulation period may be changed to, for example, a 1/5 frame period or 1/3 frame period in accordance with the recognition accuracy of the recognizer 704. Also, for example, the length of the shortest accumulation period may be changed in accordance with the brightness of the subject.

Furthermore, even if the readout period is set to every 1/4 frame period, the substantial accumulation period may be made shorter than the 1/4 frame period by resetting the counter 502 halfway through the accumulation period of the frame 1_1 in Fig. 12 in accordance with the brightness of the subject or the image recognition accuracy. Also, for example, the counter 502 may temporarily be reset at time T1 or the like in Fig. 12. The count value read out at time T4 may thus be adjusted.

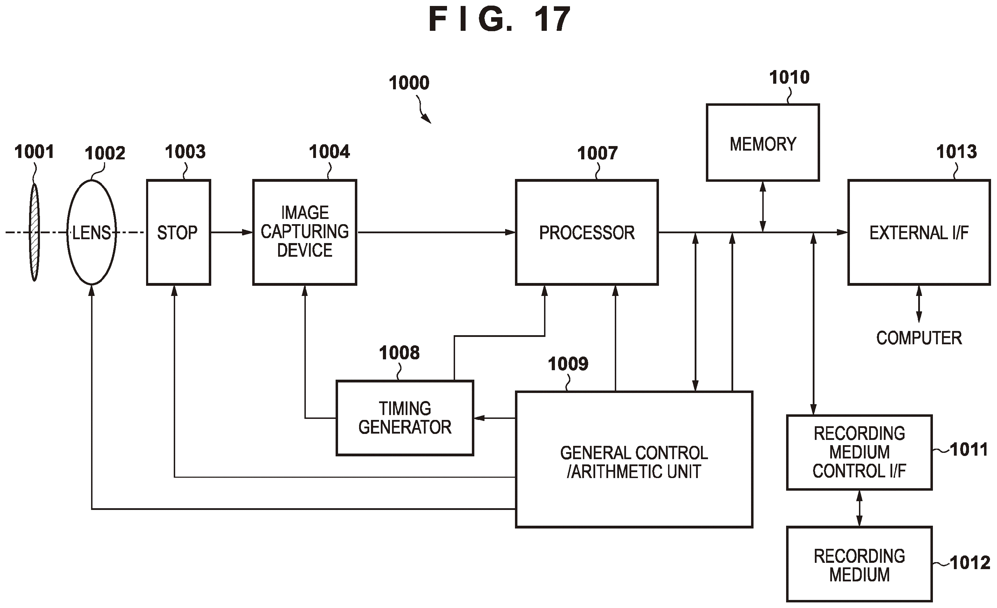

A photoelectric conversion apparatus 1000 according to this embodiment, which is configured to be able to execute the above-described weighting count operation or advanced acquisition operation and change a method when performing correction processing for an image signal based on the count result of counting by the counting unit 520, will be described next. Fig. 17 is a block diagram showing an example of the schematic configuration of the photoelectric conversion apparatus 1000 according to this embodiment. The photoelectric conversion apparatus 1000 can be applied to various photoelectric conversion systems. Examples of the applicable photoelectric conversion system are a digital still camera, a digital camcorder, a monitor camera, a copying machine, a facsimile apparatus, a mobile phone, an in-vehicle camera, and an observation satellite, and application examples will be described later. A camera module including an optical system such as a lens and an image capturing apparatus is also included in the photoelectric conversion apparatus 1000 according to this embodiment. As an example, Fig. 17 exemplifies the block diagram of a digital still camera.

The photoelectric conversion apparatus 1000 shown in Fig. 17 can include an image capturing apparatus 1004, and a lens 1002 that forms an optical image of a subject on the image capturing apparatus 1004. The photoelectric conversion apparatus 1000 can further include a stop 1003 capable of changing the amount of light that passes through the lens 1002, and a barrier 1001 for protecting the lens 1002. The lens 1002 and the stop 1003 form an optical system that condenses light to the image capturing apparatus 1004. The image capturing apparatus 1004 converts the optical image formed by the lens 1002 into an electrical signal. As the image capturing apparatus 1004, the above-described photoelectric conversion device 100 including the plurality of pixels 101 and the timing controller TC (the vertical scanning circuit 110 and the controller 115) is used.

The photoelectric conversion apparatus 1000 includes a processor 1007 that is an image generator configured to generate image signal data by processing an image signal output from the image capturing apparatus 1004. The processor 1007 performs an operation of performing various kinds of correction or compression as needed and outputting image data. The processor 1007 may be formed in a semiconductor layer provided with the image capturing apparatus 1004. That is, the image capturing apparatus 1004 and the processor 1007 may be formed in the same semiconductor layer. However, the present disclosure is not limited to this, and the processor 1007 may be formed in a semiconductor layer different from that of the image capturing apparatus 1004.

The photoelectric conversion apparatus 1000 can further include a memory 1010 configured to temporarily store image signal data, and an external interface (I/F) 1013 configured to communicate with, for example, a computer arranged outside the photoelectric conversion apparatus 1000. Also, the photoelectric conversion apparatus 1000 can include a recording medium 1012 such as a semiconductor memory configured to record or read out image capturing data, and a recording medium control interface (I/F) 1011 configured to perform recording in or readout from the recording medium 1012. The recording medium 1012 may be incorporated in the photoelectric conversion apparatus 1000 or may be detachable.

The photoelectric conversion apparatus 1000 can include a general control/arithmetic unit 1009 that controls various kinds of arithmetic processing and the whole digital still camera, and a timing generator 1008 that outputs various kinds of timing signals to the image capturing apparatus 1004 and the processor 1007. Here, some or all of the timing signals output from the timing generator 1008 may be input from the outside of the photoelectric conversion apparatus 1000. In other words, the photoelectric conversion apparatus 1000 includes at least the image capturing apparatus 1004 that is an example of the above-described photoelectric conversion device 100, and the processor 1007 that processes an image signal based on the count result of counting by the counting unit 520 of the image capturing apparatus 1004.

The image capturing apparatus 1004 outputs an image signal based on the count result to the processor 1007. The processor 1007 performs predetermined signal processing for the image signal output from the image capturing apparatus 1004 and outputs image signal data for generating an image.

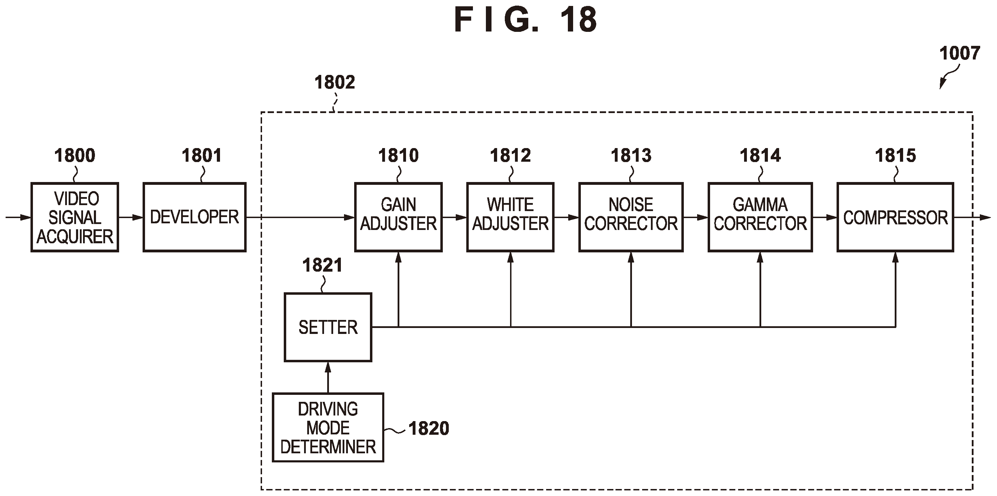

Fig. 18 is a block diagram for explaining functions in the processor 1007. A video signal acquirer 1800 receives an image signal output from the image capturing apparatus 1004 and converts it into an image data format processible at the subsequent stage. The converted image signal undergoes demosaic processing by a developer 1801 and is supplied to a corrector 1802.

The corrector 1802 can include a gain adjuster 1810, a white adjuster 1812, a noise corrector 1813, a gamma corrector 1814, and a compressor 1815. The functions included in the corrector 1802 are not limited to those illustrated, and another function may be added. Also, any one of the functions included in the corrector 1802 may be removed. It can be said that the corrector 1802 need only include at least one function of the gain adjuster 1810, the white adjuster 1812, the noise corrector 1813, the gamma corrector 1814, and the compressor 1815.

The image signal data generated by the corrector 1802 can be sent to the memory 1010 configured to temporarily store the image signal data. Also, the image signal data generated by the corrector 1802 can be sent to the external I/F 1013 configured to communicate with, for example, a computer outside the photoelectric conversion apparatus 1000.

In the corrector 1802, a driving mode determiner 1820 and a setter 1821 are arranged. The photoelectric conversion apparatus 1000 according to this embodiment can operate in a plurality of driving modes. The plurality of driving modes include a mode of acquiring the count result of at least two or more sub-frames of different exposure periods in one frame (a driving mode in which the advanced acquisition operation is performed: to be sometimes referred to as an advanced acquisition mode hereinafter) described with reference to Fig. 12 and the like. In addition, the plurality of driving modes include a mode of adding a count value of a photon at a photon incident timing with respect to the clock signal TCLK (a driving mode in which the weighting count operation is performed: to be sometimes referred to as a weighting count mode hereinafter) described with reference to Fig. 8 and the like. The advanced acquisition mode and the weighting count mode can be driven simultaneously. The driving mode determiner 1820 determines which mode is enabled, and supplies the mode determination result to the functions included in the corrector 1802. The setter 1821 performs setting of correction processing for the functions of the corrector 1802 based on the determination result of the driving mode determiner 1820. Thus, the processor 1007 can change the method of correction processing in accordance with at least one of the generation timing of each of a plurality of pulse signals (clock signals TCLK) in each sub-frame period (weighting count mode) and the period length, in each frame period, from the start of the frame period to the sub-frame period in which the count result is read out (advanced acquisition mode), as will be described later in detail. Here, as for the change of the method of correction processing, the change method differs between the functions included in the corrector 1802. The change of the method of correction processing in each function will be described later for each function.

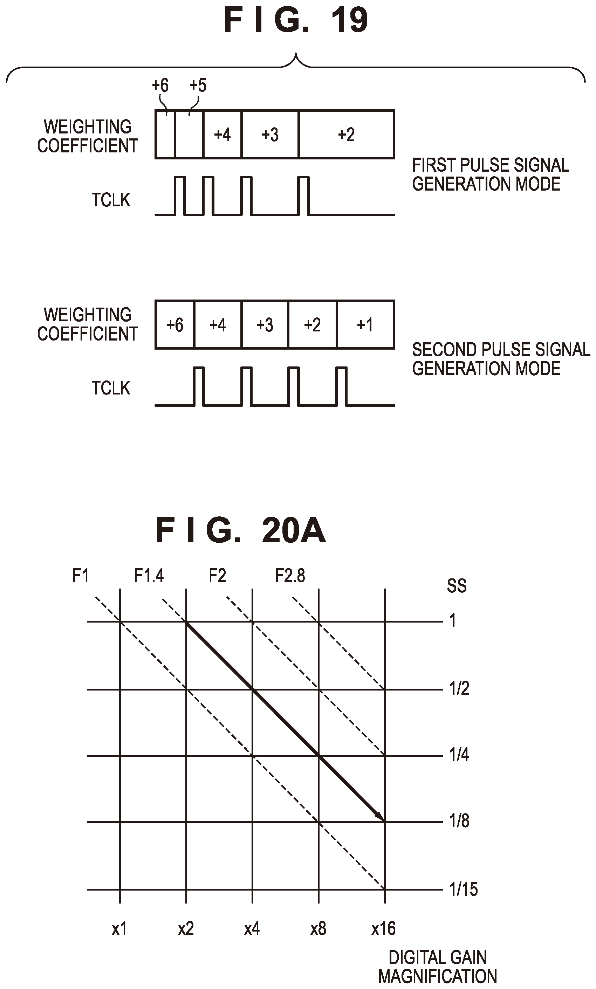

Fig. 19 is a view showing the relationship between the generation timings of a plurality of clock signals TCLK and weighting coefficients in each sub-frame in the weighting count mode. In a first pulse signal generation mode, the timing controller TC generates many clock signals TCLK in a region where the weighting coefficient is large, and the step width of the weighting coefficient is small in the region. It is therefore possible to generate an image that more richly expresses the tone in a high luminance area. For example, in the first pulse signal generation mode, the timing controller TC may generate the clock signal TCLK such that the period becomes large as the sub-frame period advances. The interval of the clock signals TCLK in each sub-frame period may be set to the logarithmic compression of an actual time. On the other hand, in a second pulse signal generation mode, the timing controller TC generates many clock signals TCLK in a region where the weighting coefficient is small, and the step width of the weighting coefficient is small in the region. It is therefore possible to generate an image that more richly expresses the tone in a low luminance area. It can be said that the second pulse signal generation mode is a mode in which tonality of low luminance is higher than in the first pulse signal generation mode. For example, in the second pulse signal generation mode, the timing controller TC may generate the clock signals TCLK at equal intervals. As described above, the timing controller TC is configured to be operable in a plurality of pulse signal generation modes including the first pulse signal generation mode and the second pulse signal generation mode, in which the generation timings of the plurality of clock signals TCLK are different.

Each process in the corrector 1802 of the processor 1007 will be described next. As described above, as the correction processing in the corrector 1802, executing at least one of the functions shown in Fig. 18 suffices.

The gain adjuster 1810 performs gain adjustment for the image signal output from the developer 1801. The gain adjuster 1810 has a function of digitally increasing/decreasing the signal level of the image signal output from each pixel 101. That is, the gain adjuster 1810 has a function of controlling the brightness of an image.

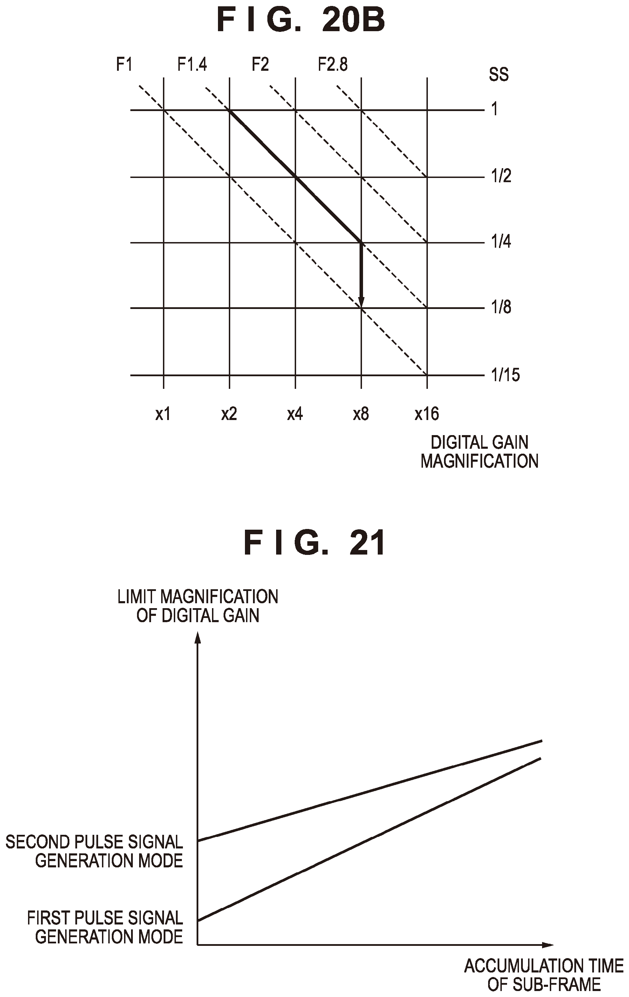

Figs. 20A and 20B are views showing an example of digital gain adjustment in the gain adjuster 1810. As a method of deciding the brightness of an image, combining a shutter speed and a stop and adjusting the digital gain are known in general. In this embodiment, the shutter speed is decided by the exposure period of the image capturing apparatus 1004, and the longer the exposure period is, the lower the shutter speed is. The stop is decided by the stop 1003, and the larger the stop is, the smaller the value exhibited by the f-number is.

Fig. 20A is a view showing what digital gain is to be set to maintain the brightness of an image when the f-number is fixed and the shutter speed is increased. Each broken line in Fig. 20A indicates an f-number, and any point on the same broken line indicates the same f-number. For example, in a case where the f-number is F1.4 and the shutter speed (SS) is increased from 1 sec to 1/8 sec, to maintain the brightness of an image, the digital gain needs to be increased from ×2 to ×16.

Fig. 20B shows the digital gain adjustment method of the gain adjuster 1810 according to this embodiment. For example, the digital gain is not set to ×16 but is limited to ×8, and the brightness is maintained by, for example, changing the f-number from F1.4 to F1.

Fig. 21 is a view showing how the largest magnification (to be sometimes referred to as a limit magnification hereinafter) of the digital gain adjustment shown in Fig. 20B changes depending on the difference of the period length of the exposure period of each sub-frame in the advanced acquisition mode and the difference of the pulse signal generation mode in the weighting count mode. First, if the period length of the exposure period of the sub-frame is short, the limit magnification of the digital gain is set to a low value in either pulse signal generation mode. Also, if the timing controller TC operates in the first pulse signal generation mode in which a high luminance tone is richly expressed, the limit magnification is set lower than in a case where the timing controller TC operates in the second pulse signal generation mode.

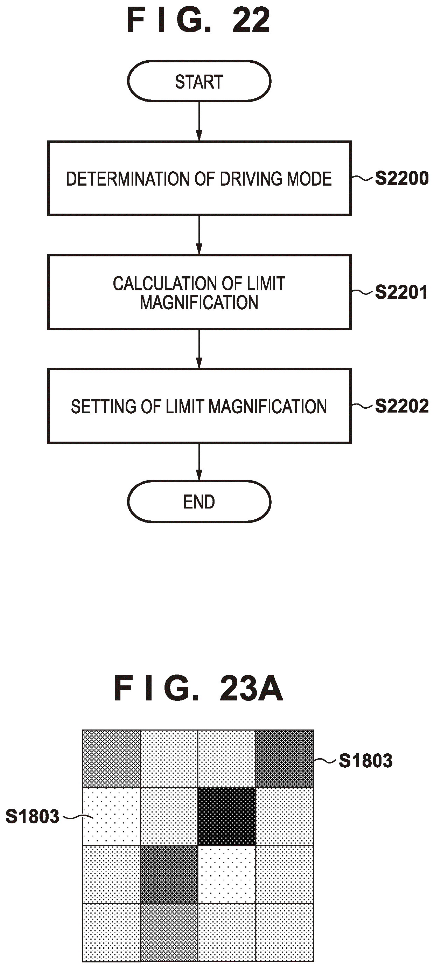

Fig. 22 is a flowchart of setting of the limit magnification of gain adjustment shown in Fig. 21, which is executed by the general control/arithmetic unit 1009. In step S2200, the driving mode determiner 1820 determines the driving mode. Next, in step S2201, the setter 1821 acquires the limit magnification of the digital gain based on the determined driving mode. The limit magnification may be acquired by input/output conversion using a preset table or the like. For example, the general control/arithmetic unit 1009 reads out a table stored in the memory 1010. Next, in step S2202, the setter 1821 sets the limit magnification of the digital gain acquired in step S2201 to the gain adjuster 1810.

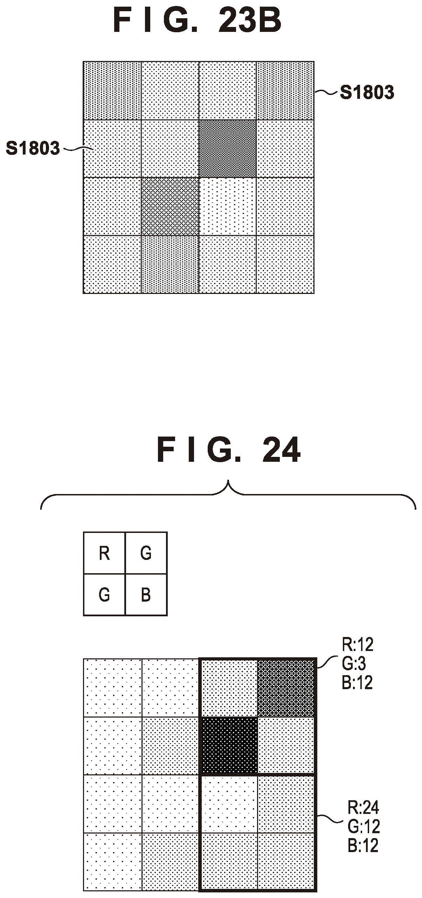

Figs. 23A and 23B are views for explaining the application effect of this embodiment. In the weighting count mode, the amount to additionally increase the count of photons is decided depending on at which pulse generation timing of the clock signal TCLK a photon enters. Hence, if the photon incident count is not sufficiently large, even under the same illuminance, for example, an image with an uneven luminance as shown in Fig. 23A is obtained depending on the incident timing of a photon. This phenomenon will be referred to as dark part luminance noise hereinafter. This phenomenon can be particularly conspicuous in a low luminance area where photon incidence is low or in a state in which the period length of the exposure period is short. For this reason, the shorter the period length of the exposure period of a sub-frame in the advanced acquisition mode is, the more conspicuous the dark part luminance noise is. In addition, the dark part luminance noise is conspicuous in the first pulse signal generation mode in which the tone in a low luminance area is coarse in the weighting count mode.

As shown in Figs. 20B and 21, the limit magnification in the gain adjuster 1810 is changed. That is, when the method of correction processing for correcting the brightness of an image signal is changed, the photon incident count is increased by making the f-number small even if the period length of the exposure period of a sub-frame in the advanced acquisition mode is short. Thus, as shown in Fig. 23B, dark part luminance noise can be reduced, and generation of image noise or influence on the appearance can be reduced. Similarly, in a case where the timing controller TC operates in the first pulse signal generation mode, the photon incident count is increased by making the f-number small. Thus, dark part luminance noise can be reduced, and generation of image noise or influence on the appearance can be reduced.

Change of the method of correction processing in the white adjuster 1812 will be described next. The white adjuster 1812 adjusts the white balance of an image. The colors of the subject in the image are thus expressed by colors close to the subject in the real space. Since this function calculates the reference color for color adjustment of the image from the colors of the subject in the image, it is necessary to capture the subject without color noise. In general, white balance adjustment is implemented by calculating the color average of all pixels of the target image, and changing the magnification to multiply color components included in each image signal such that the balance of red, blue, and green colors falls within a predetermined range.

Fig. 24 is a view showing an example of an image signal in which dark part luminance noise is generated in image signals supplied to the video signal acquirer 1800. Each cell in Fig. 24 indicates a pixel, and shading indicates luminance. Black indicates a dark state, and white indicates a bright state. If the image signal is observed in blocks of four pixels of RGGB, that is, in units of pixels after demosaicing, the pixels have different colors even under the same illuminance. This means that color noise is generated. For example, if the four pixels at the upper right corner are demosaiced, the pixel values are R = 12, G = 3, and B = 12. However, if the four pixels at the lower right corner are demosaiced, the pixel values are R = 24, G = 12, and B = 12. This difference is particularly conspicuous in a low luminance area where photons enter little or in a state in which the period length of the exposure period is short. If such color noise exists, it may be impossible to correctly perform white balance adjustment.

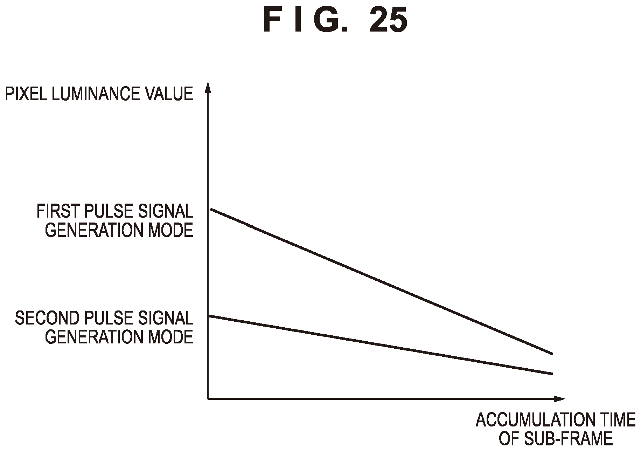

Using control as shown in Fig. 25, the processor 1007 changes the reference pixels to be referred to for white balance adjustment among the plurality of pixels. More specifically, a color noise generation region is removed from a reference region for performing white balance adjustment. A pixel luminance value on the ordinate is a threshold for the luminance value of each pixel of image data input to the white adjuster 1812, and a pixel having a luminance value smaller than the threshold is excluded from reference pixels used to calculate white balance. As described with reference to Fig. 24, generation of image noise is particularly conspicuous in a low luminance area where photons enter little or in a state in which the exposure period is short. Hence, when a luminance value is set to the threshold, a pixel arranged in the image noise generation region can be excluded from the reference pixels for white balance adjustment.

Of the plurality of pixels, pixels whose image signal is not less than the predetermined threshold are selected as reference pixels. As shown in Fig. 25, the shorter the period length of the exposure period of a sub-frame in the advanced acquisition mode is, the higher the set threshold is. A pixel whose luminance value is higher than in a case where the period length is long is excluded from the reference pixels. Also, if the timing controller TC operates in the first pulse signal generation mode, a higher threshold than in a case where it operates in the second pulse signal generation mode is set.

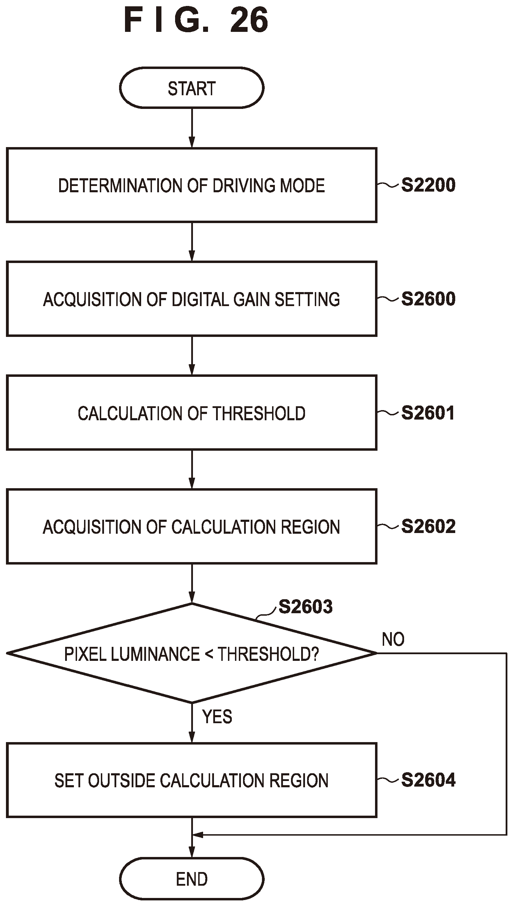

Fig. 26 is a flowchart showing details of an example of control of white balance adjustment executed by the general control/arithmetic unit 1009. A description of the same processes as in Fig. 22 will be omitted.

In step S2600, the set magnification of the digital gain set in the gain adjuster 1810 is acquired. Next, in step S2601, the threshold used to exclude color noise pixels from the white balance calculation region is acquired. The threshold may be acquired by input/output conversion using a preset table. For example, the general control/arithmetic unit 1009 reads out a table stored in the memory 1010, and the setter 1821 applies it to the white adjuster 1812. In this case, the set magnification of the digital gain acquired in step S2600 may be divided to eliminate the influence of the set magnification of the digital gain.

After that, in step S2602, the region range set as the reference region of white balance is acquired. This setting is done by the general control/arithmetic unit 1009 via the setter 1821.

Next, in step S2603, concerning an image signal input to the white adjuster 1812, it is determined whether each pixel luminance is less than the threshold. If the pixel luminance is less than the threshold, the process advances to step S2604, and otherwise, the processing is ended. In step S2604, the pixel whose pixel luminance is less than the threshold is excluded from the reference pixels for white balance adjustment.

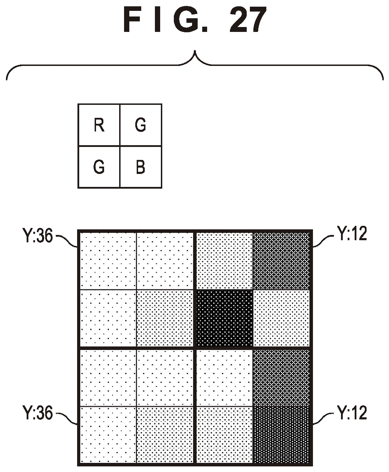

Fig. 27 is a view for explaining the application effect of this embodiment. Each cell indicates a pixel, and Fig. 27 shows a state in which dark part luminance noise is generated under a condition that photons enter all pixels at the same illuminance. The variation of the incident timing is conspicuous in eight cells on the right side of Fig. 27, and as the luminance after demosaicing when these pixels are observed in units of pixels, Y = 12 for two pixels on the right side, and Y = 36 for two pixels on the left side. Here, in the two pixels on the right side, color noise is generated, but the luminance value is smaller as compared to the two pixels on the left side. Hence, when a threshold is applied to the luminance after demosaicing, the reference region of white balance can be set only for the two pixels on the left side for which no color noise is generated.

As described above, the color noise generation region is excluded from the reference region of white balance. That is, the method of correction processing for white balance adjustment is changed. This prevents white balance adjustment from malfunctioning because of dark part luminance noise. As a result, change of the colors of the subject between the real space and an image is reduced.

Change of the method of correction processing in the noise corrector 1813 will be described next. The noise corrector 1813 corrects image noise. Correction of image noise is performed by a method of replacing the value of the image signal of a pixel of the correction target based on the information of the image signals of peripheral pixels or multiplying a coefficient. Image noise can be luminance noise that the photoelectric conversion element 102 itself generates. In general, pixel value replacement based on the information of the peripheral pixels is performed based on the range of 3 × 3 pixels or 5 × 5 pixels around the correction target pixel. The range of the peripheral pixels can change depending on the strength required for correction or depending on whether the correction is correction for obtaining high contrast or correction for moderating contrast. There are a variety of methods of obtaining the information of peripheral pixels, including a median filter having a distribution suitable for removing pulse noise and a Gaussian filter relatively suitable for leaving edge information. To increase the correction strength, a different method is used by each correction method. For example, in the median filter, the correction strength can be increased by expanding the range of peripheral pixels to be referred to with respect to the correction target pixel as the center. In the Gaussian filter, the correction strength can be increased by making the coefficient to multiply the peripheral pixels large. The noise corrector 1813 may be implemented not as single correction but as a collective function for performing a plurality of correction processes. For example, correction may be performed by applying a median filter and then applying a Gaussian filter. The above-described correction is processing performed in one frame of an image. However, correction processing may be executed over different frame periods of the correction target pixel and, for example, correction processing for performing information complementing based on the difference between frames may be executed. In this case, the correction strength can be increased by increasing the number of frame periods to be referred to.

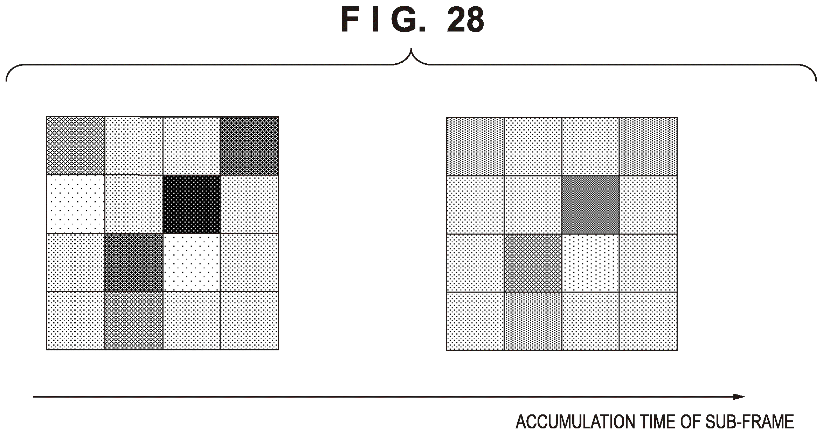

Fig. 28 is a view showing the difference in appearance between images due to the difference of the period length of the exposure period of a sub-frame in the advanced acquisition mode. Since the exposure period is shorter in the left image than in the right image, the photon incident count is small, and there is much dark part luminance noise. Also, in the weighting count mode, the more coarse the tone on the low luminance side is, the more the dark part luminance noise is generated. Hence, it is necessary to perform noise correction processing according to the period length of the exposure period of the sub-frame in the advanced acquisition mode and the generation timing of the pulse signal of each clock signal TCLK in the weighting count mode.

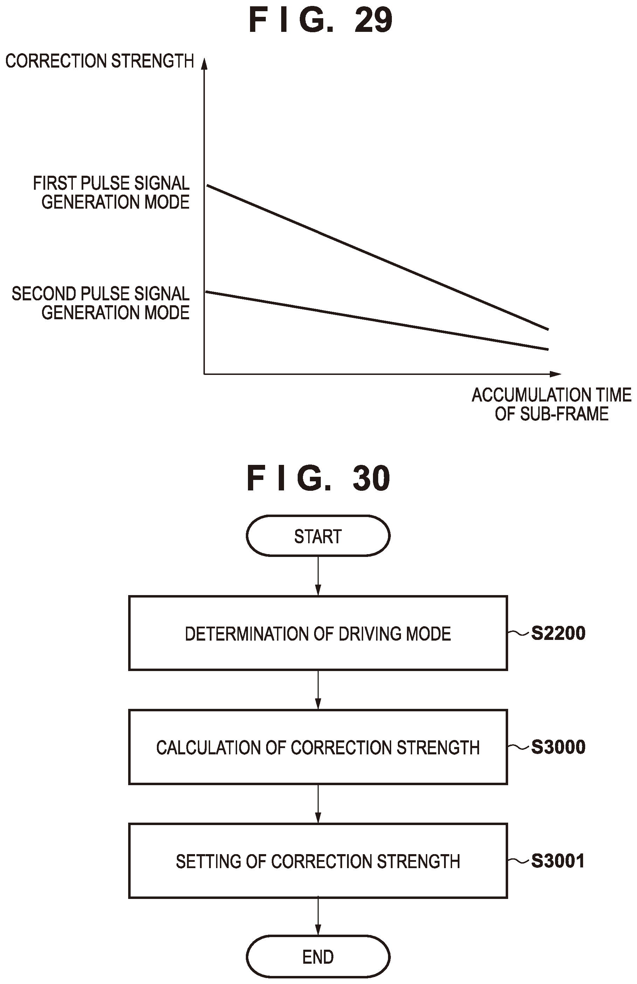

Fig. 29 is a schematic explanatory view of a method of changing the correction strength of noise correction processing according to the period length of the exposure period of the sub-frame in the advanced acquisition mode and the generation timing of the pulse signal in the weighting count mode. The shorter the period length of the exposure period of the sub-frame is, the more the dark part luminance noise is generated. For this reason, in the advanced acquisition mode, control is performed to increase the correction strength of noise correction processing such that noise is suppressed more strongly as the period length of the exposure period becomes shorter. This implements change of the strength of noise correction processing according to the noise generation situation. Also, dark part luminance noise is generated more readily in the first pulse signal generation mode in which pulse generation positions in the weighting count mode concentrate to the high luminance side than in the second pulse signal generation mode in which the pulse generation positions concentrate to the low luminance side. Hence, control is performed to make the correction strength higher in a case where the timing controller TC operates in the first pulse signal generation mode than in a case where the timing controller TC operates in the second pulse signal generation mode. This implements change of the correction strength of noise correction processing according to the noise generation situation.

Fig. 30 is a flowchart showing details of an example of control of changing the correction method of the noise corrector 1813, which is executed by the general control/arithmetic unit 1009. A description of the same processes as in Fig. 22 will be omitted.

In step S3000, the driving mode determined in step S2200 is input, and the correction strength to be set for the noise corrector 1813 is decided. The correction strength may be decided by input/output conversion using a preset table. For example, the general control/arithmetic unit 1009 reads out a table stored in the memory 1010, and the setter 1821 applies it to the noise corrector 1813. As for the correction function such as a median filter or a Gaussian filter, the filter of the same type may always be used, or the filter may be replaced or added/removed. In this case, in step S3001, a 2-input table may be prepared by adding the type of the correction function as an input value to the table, in addition to the driving mode. It suffices that the type of the correction function is transmitted from the general control/arithmetic unit 1009 to the setter 1821.

As described above, the correction strength in the noise corrector 1813 can be changed in accordance with the period length of the exposure period of the sub-frame in the advanced acquisition mode and the generation timing of the pulse signal in the weighting count mode. By changing the method of correction processing, generation of image noise or influence on the appearance can be reduced in image signal data output from the processor 1007.

Change of the correction method in the gamma corrector 1814 will be described next. The gamma corrector 1814 performs gamma correction for correcting the luminance distribution of an image. The gamma corrector 1814 converts the luminance (pixel value) of an input image signal using a correction table and outputs it. The correction is performed for each pixel and, in a case of an RGB image, correction is performed individually for each color pixel. This correction is normally performed in accordance with the spectral characteristics of a human eye and is executed for the purpose of making image appearance close to the appearance of a subject actual viewed by human eyes by lifting a dark part.

In this case, if the period length of the exposure period of the sub-frame in the advanced acquisition mode is short and the generation timing of the pulse signal in the weighting count mode is at a position where the tone in a low luminance area is coarse, dark part luminance noise in which luminance varies in a dark part of the image is generated. Hence, if the luminance level of the dark part of the image is raised by gamma correction, noise is enhanced, and image noise is noticeable in the dark part of the image. In this embodiment, the method of correction processing of gamma correction is changed to make the image noise in the dark part unnoticeable.

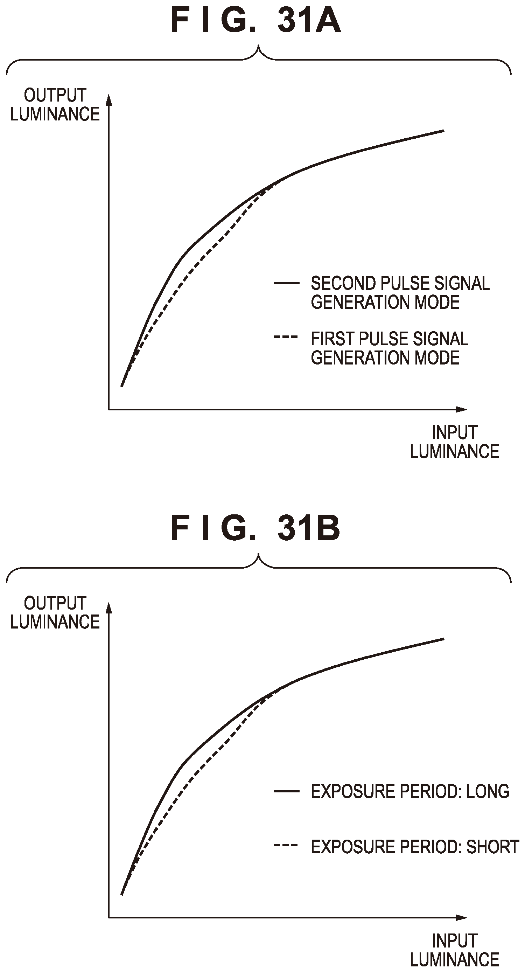

Figs. 31A and 31B are views showing gamma correction tables in the gamma corrector 1814. The luminance value (pixel value) of an image signal input to the gamma corrector 1814 is converted using the table for each input luminance. In gamma correction, the luminance level of an image signal is converted in accordance with a predetermined conversion magnification, and a luminance level to be output in correspondence with an input luminance level is decided by the gamma correction table. Here, the conversion table is set such that the value after luminance conversion is larger in a dark part. If a consistent table is used regardless of the driving mode, much image noise is generated in the dark part of the image, as described above.

Hence, a different gamma correction table is applied in the gamma corrector 1814 in accordance with the period length of the exposure period of the sub-frame in the advanced acquisition mode and the generation timing of the pulse signal in the weighting count mode. This suppresses enhancement of image noise in the dark part of the image.

Fig. 31A shows the difference of the gamma correction table in the weighting count mode. The gamma corrector 1814 of the processor 1007 sets the conversion magnification, at least in a partial range where the input luminance is lower than a predetermined threshold, smaller in a case where the timing controller operates in the first pulse signal generation mode than in a case where the timing controller operates in the second pulse signal generation mode. It can be said that the conversion magnification in the dark part in the first pulse signal generation mode in which the tone in low luminance is coarse is set smaller than in the second pulse signal generation mode in which the tone in low luminance is rich. This suppresses image noise in the dark part of the image.

Fig. 31B shows the difference of the gamma correction table according to the difference of the period length of the exposure period of the sub-frame in the advanced acquisition mode. More specifically, the shorter the period length of the exposure period of the sub-frame is, the smaller the conversion magnification set by the gamma corrector 1814 of the processor 1007 in the dark part is. Fig. 31B shows that the conversion magnification is changed at least in a partial range where the input luminance is lower than a predetermined threshold. This suppresses image noise in the dark part of the image.

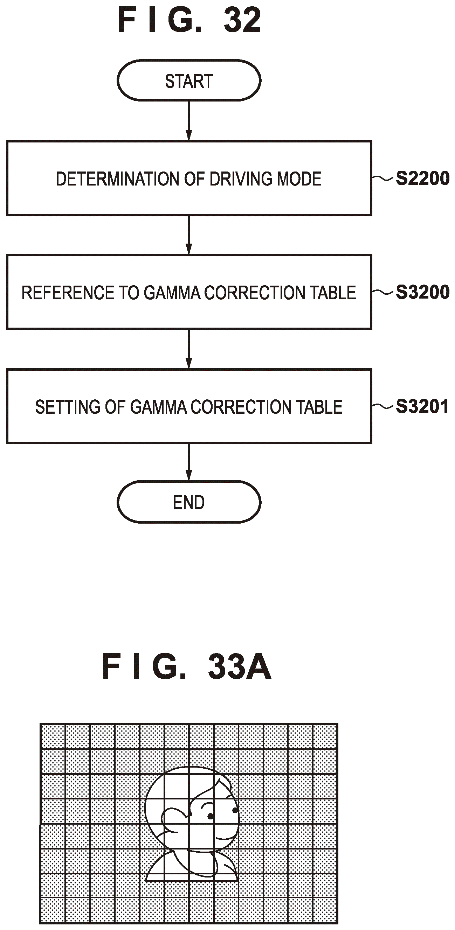

Fig. 32 is a flowchart showing details of an example of control of changing the correction method of the gamma corrector 1814, which is executed by the general control/arithmetic unit 1009. A description of the same processes as in Fig. 22 will be omitted.

In step S3200, the gamma correction table is read out based on the driving mode determined in step S2200. For example, the gamma correction table may be stored in the memory 1010 in advance, read out by the general control/arithmetic unit 1009, and supplied to the gamma corrector 1814. Here, Figs. 31A and 31B show table values in the weighting count mode and the advanced acquisition mode, but a table for a case where both driving modes are simultaneously enabled may also be prepared. In step S3201, the readout table is set in the gamma corrector 1814 via the setter 1821.

As described above, the gamma correction table in the gamma corrector 1814 can be changed in accordance with the period length of the exposure period of the sub-frame in the advanced acquisition mode and the generation timing of the pulse signal in the weighting count mode. By changing the method of correction processing, in an image output from the processor 1007, the image noise level in the dark part of the image can be lowered.

Change of the method of compression processing for reducing the influence of dark part luminance noise in the compressor 1815 will be described next. The image signal input to the compressor 1815 has a large data amount and may largely press the memory capacity. Normally, compression processing for reducing the signal amount of data is performed for the image signal, and the image signal is compressed into image signal data in, for example, JPEG format.

For example, in JPEG compression, using a characteristic that the human eye is insensitive to a high-frequency component, the image signal is frequency-converted by discrete cosine transformation (DCT), the high-frequency component is removed, and the image signal is regenerated into an image. The information amount is thus decreased such that the decrease cannot be recognized by the human eye. The high-frequency component to be removed can be controlled by the compression ratio. The higher the compression ratio is, the lower the frequency component to be removed is. The lower the frequency to be removed is, the more readily the human eye recognizes deficiency of information.

As described above, if the period length of the exposure period of the sub-frame in the advanced acquisition mode is short and the generation timing of the pulse signal in the weighting count mode is at a position where the tone in low luminance is coarse, dark part luminance noise in which luminance varies in the dark part of the image is generated. The variation of the luminance means an increase of the high-frequency component, and this is determined not to be the compression target, and image noise in the dark part readily remains in the image after compression. For this reason, the capacity of image data after compression readily increases.

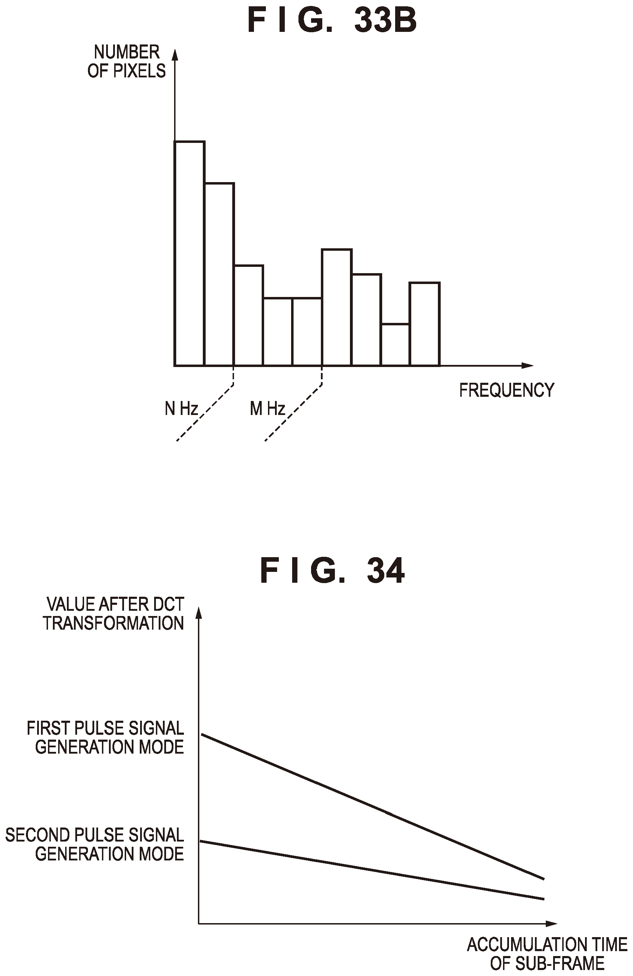

Fig. 33A shows an example of an image generated from an image signal input to the compressor 1815, in which a hatching region indicates a dark region with low luminance, and lattice lines define blocks each of which is a unit of DCT transformation. Fig. 33B shows a histogram obtained by performing DCT transformation for the image shown in Fig. 33A. Here, in general JPEG compression, for example, using M [Hz] as a threshold, a frequency of M [Hz] or more is removed, and image signal data is regenerated by inverse transformation. On the other hand, in this embodiment, the image shown in Fig. 33A is labeled into at least two or more regions by the luminance level, and frequency components are removed using a different frequency as the threshold in each region. For example, in the dark region with low luminance in Fig. 33A, frequency components are removed using N [Hz] shown in Fig. 33B as the threshold, and in the remaining regions, frequency components are removed using M [Hz] as the threshold.

Fig. 34 is a schematic explanatory view of a method of changing the compression processing according to the period length of the exposure period of the sub-frame in the advanced acquisition mode and the generation timing of the pulse signal in the weighting count mode. A value after DCT transformation on the ordinate indicates that the larger the value is, the lower the frequency component is.

If the period length of the exposure period of the sub-frame is short, much image noise is generated. For this reason, the threshold for the value after DCT transformation is made higher when the exposure period is shorter. That is, the threshold is set such that if the period length of the exposure period of the sub-frame is shorter, the frequency component to be removed includes a low-frequency component. In addition, image noise is generated more readily in the first pulse signal generation mode in which pulse generation positions in the weighting count driving mode concentrate to the high luminance side than in the second pulse signal generation mode in which the pulse generation positions concentrate to the low luminance side. Hence, the threshold for the value after DCT transformation is made large in the weighting count driving mode in which pulse generation positions concentrate to the low luminance side. That is, if the timing controller TC operates in the first pulse signal generation mode, the threshold is set such that the frequency component to be removed includes a low-frequency component as compared to a case where the timing controller operates in the second pulse signal generation mode.

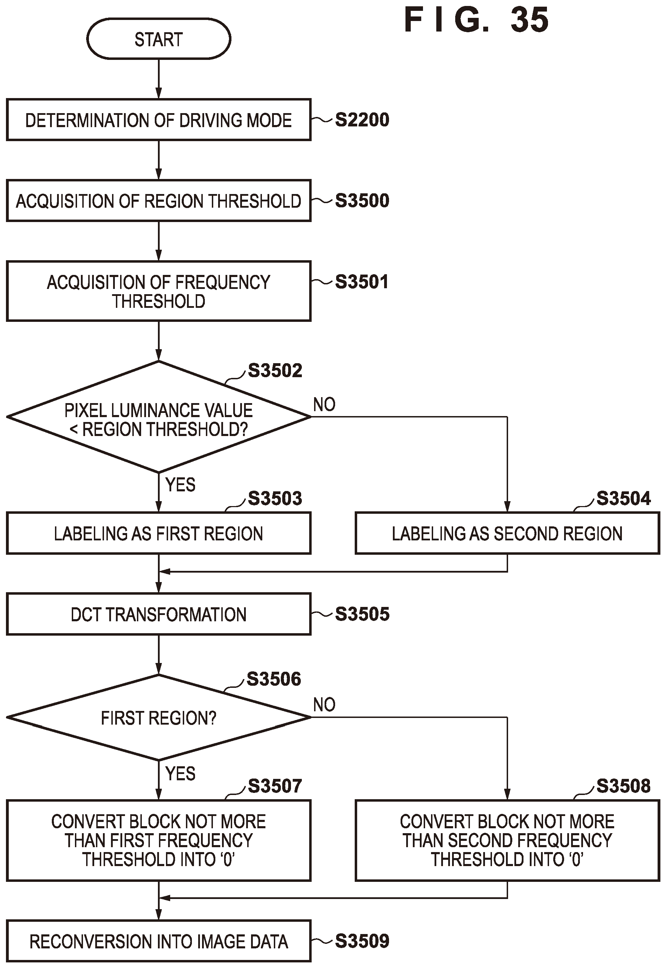

Fig. 35 is a flowchart showing details of an example of control of correcting the compression ratio of the compressor 1815 for each region, which is executed by the general control/arithmetic unit 1009. A description of the same processes as in Fig. 22 will be omitted.

In step S3500, a threshold of region determination is acquired for the luminance value (pixel value) of an image signal supplied to the compressor 1815. For example, the threshold of region determination may be stored in the memory 1010 in advance. The general control/arithmetic unit 1009 reads out the threshold and applies it to the compressor 1815 via the setter 1821. Also, since the luminance value changes depending on the digital gain, the same processing as in step S2600 of Fig. 26 may be performed.

In step S3501, the above-described threshold of frequency components for compression is acquired. As for the threshold of frequency components as well, for example, a value stored in the memory 1010 in advance may be read out by the general control/arithmetic unit 1009 and applied.

Next, in step S3502, an image signal input to the compressor 1815 is labeled into two or more regions based on the threshold of region determination acquired in step S3500. In a case of a region in which the luminance value (pixel value) is smaller than the threshold, the process advances to step S3503, and the region is labeled as a first region. In a case of a region in which the luminance value is equal to or larger than the threshold, the process advances to step S3504, and the region is labeled as a second region. In this embodiment, an example in which labeling to the first region and the second region has been described. However, the present disclosure is not limited to this, and labeling to three or more regions may be performed. In this case, step S3506 branches to three or more destinations.

In step S3505, the image signal is DCT-transformed. In step S3506, it is determined whether the DCT-transformed image signal is labeled to the first region. In a case of the first region, the process advances to step S3507, and a value not more than the threshold is converted into 0 using the first threshold of frequency components. In a case of the second region, the process advances to step S3508, and a value not more than the threshold is converted into 0 using the second threshold of frequency components.

Next, in step S3509, the DCT-transformed image signal is converted into an image signal (image signal data) again.

Here, the threshold of frequency components read out in step S3501 is a threshold for which a number corresponding to the number of regions is read out, and different thresholds are used for the first region and the second region. Also, in the flowchart shown in in Fig. 35, the first region is the region of a dark part of the image, and the first threshold of frequency components is larger than the second threshold.

As described above, the setting of the threshold of frequency components of the compressor 1815 for each region can be changed in accordance with the period length of the exposure period of the sub-frame in the advanced acquisition mode and the generation timing of the pulse signal in the weighting count mode. By changing the compression method, in an image output from the processor 1007, an image in which the influence of image noise in the dark part of the image is reduced can be provided.

An example of application of the above-described photoelectric conversion apparatus 1000 to a photoelectric conversion system or a moving body will be described below.

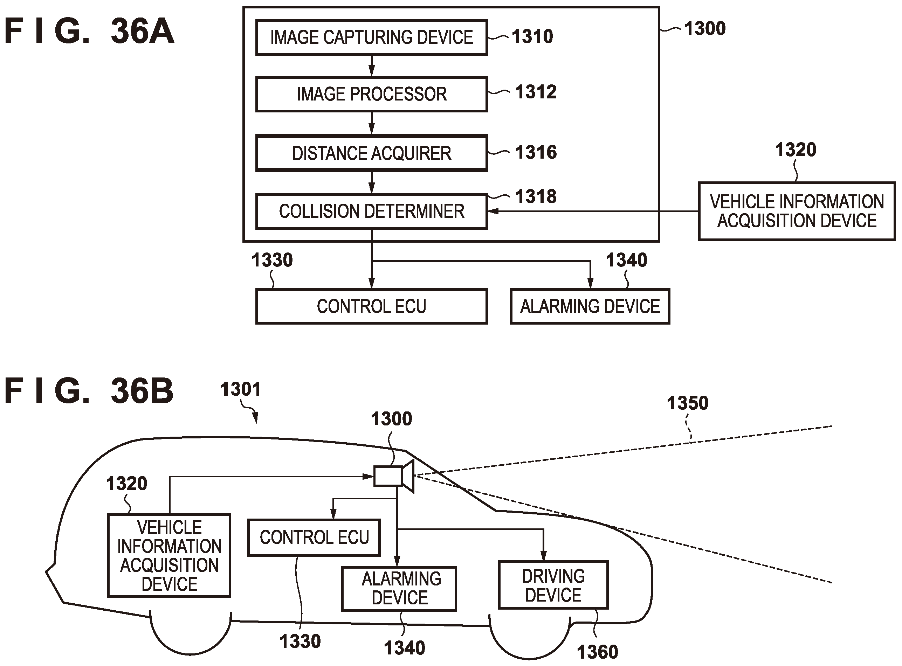

Figs. 36A and 36B are views showing the configuration of a photoelectric conversion system 1300 and a moving body 1301 according to the first application example. Fig. 36A shows an example of a photoelectric conversion system concerning an in-vehicle camera. The photoelectric conversion system 1300 includes an image capturing apparatus 1310. The image capturing apparatus 1310 is the above-described photoelectric conversion apparatus 1000. The photoelectric conversion system 1300 includes an image processor 1312 that performs image processing for a plurality of image data acquired by the image capturing apparatus 1310. The photoelectric conversion system 1300 also includes a distance acquirer 1316 that calculates the distance up to a target object, and a collision determiner 1318 that determines, based on the calculated distance, whether there is collision possibility. Here, the distance acquirer 1316 may acquire distance information up to a target object by using Time of Flight (ToF) method, or may acquire distance information by using parallax information or the like. That is, the distance information is information concerning a parallax, a defocus amount, a distance up to a target object, and the like. The collision determiner 1318 may determine collision possibility using one of the pieces of distance information. The distance acquirer 1316 may be implemented by exclusively designed hardware, or may be implemented by a software module. The distance acquirer 1316 may be implemented by a Field Programmable Gate Array (FPGA), Application Specific Integrated Circuit (ASIC), or the like. Alternatively, the distance acquirer 1316 may be implemented by a combination of these.

The photoelectric conversion system 1300 is connected to a vehicle information acquisition apparatus 1320, and can acquire vehicle information such as a vehicle speed, a yaw rate, and a steering angle. The photoelectric conversion system 1300 is also connected to an ECU 1330 that is a control apparatus configured to output a control signal for generating a braking force to the vehicle based on the determination result of the collision determiner 1318. Furthermore, the photoelectric conversion system 1300 is connected to an alarm apparatus 1340 that generates an alarm to the driver based on the determination result of the collision determiner 1318. For example, if collision possibility is high as the determination result of the collision determiner 1318, the ECU 1330 controls a driving apparatus (machine apparatus) 1360 to perform braking, releasing the accelerator pedal, or suppressing the engine output, thereby controlling the vehicle for avoiding collision and reducing damage. The alarm apparatus 1340 sounds an alarm, displays alarm information on the screen of a car navigation system or the like, or applies a vibration to the seat belt or a steering wheel, thereby making an alarm to the user.

In this application example, the periphery of the vehicle (moving body 1301), for example, the front or rear side is captured by the photoelectric conversion system 1300. Fig. 36B shows the photoelectric conversion system when capturing the front side (image capturing range 1350) of the vehicle. The vehicle information acquisition apparatus 1320 sends an instruction to the photoelectric conversion system 1300 or the image capturing apparatus 1310. With this configuration, it is possible to further improve the accuracy of ranging.

An example in which control is executed so as not to collide with another vehicle has been explained above. The photoelectric conversion system 1300 can also be applied to control of performing automated driving following another vehicle or control of performing automated driving without deviating from a lane. Furthermore, the photoelectric conversion system 1300 can be applied not only to a vehicle such as an automobile but also to, for example, a moving body (moving apparatus) such as a ship, an airplane, or an industrial robot. The moving body includes one or both of a driving force generator that generates a driving force mainly used for moving the moving body and a rotating body mainly used for moving the moving body. The driving force generator can be an engine, a motor, or the like. The rotating body can be a tire, a wheel, a ship screw, a propeller of a moving body, or the like. In addition, the photoelectric conversion system can be applied not only to a moving body but also to equipment that broadly uses object recognition, such as an intelligent transport system (ITS).

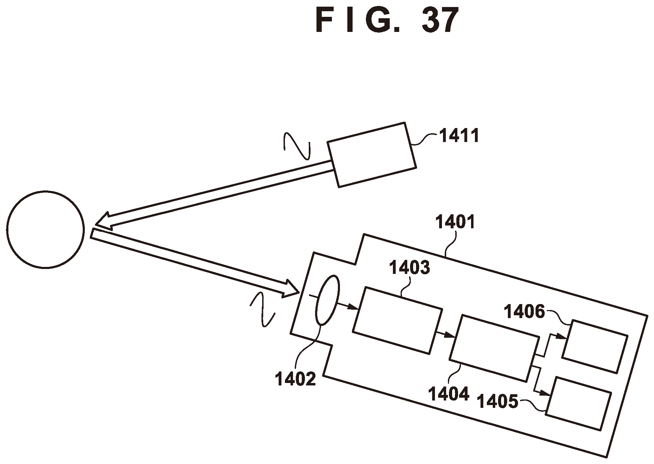

Fig. 37 is a block diagram showing an example of the configuration of a range image sensor 1401 as the photoelectric conversion system according to this embodiment. As shown in Fig. 37, the range image sensor 1401 includes an optical system 1402, a photoelectric conversion apparatus 1403, an image processing circuit 1404, a monitor 1405, and a memory 1406. Then, the range image sensor 1401 can receive light (modulated light or pulsed light) projected from a light source apparatus 1411 toward a subject and reflected by the surface of the subject, thereby acquiring a range image corresponding to the distance up to the subject.

The optical system 1402 is formed by including one or a plurality of lenses, and guides image light (incident light) from the subject to the photoelectric conversion apparatus 1403 and forms an image on the light-receiving surface (sensor portion) of the photoelectric conversion apparatus 1403.

As the photoelectric conversion apparatus 1403, the above-described photoelectric conversion apparatus 1000 is applied, and a distance signal indicating a distance obtained from a light reception signal output from the photoelectric conversion apparatus 1403 is supplied to the image processing circuit 1404.

The image processing circuit 1404 performs image processing of creating a range image based on the distance signal supplied from the photoelectric conversion apparatus 1403. Then, the range image (image data) obtained by the image processing is supplied to and displayed on the monitor 1405, and supplied to and stored (recorded) in the memory 1406.

The range image sensor 1401 having such configuration can acquire, for example, a more correct range image along with improvement in characteristic of pixels by applying the above-described photoelectric conversion apparatus 1000.

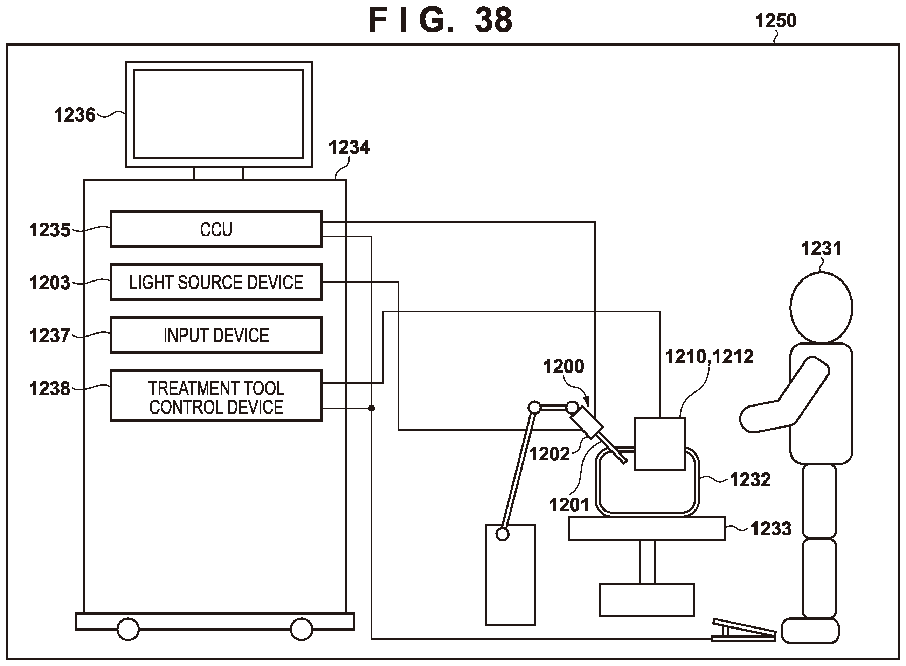

Fig. 38 is a view showing an example of the schematic configuration of an endoscopic surgery system 1250 that is a photoelectric conversion system. Fig. 38 shows a state in which an operator (doctor) 1231 operates on a patient 1232 on a patient bed 1233 using the endoscopic surgery system 1250. As shown in Fig. 38, the endoscopic surgery system 1250 is formed from an endoscope 1200, a surgical tool 1210, and a cart 1234 on which various apparatuses for endoscopic surgery are mounted.

The endoscope 1200 includes a lens barrel 1201 including a region of a predetermined length from the distal end, which is inserted into the body cavity of the patient 1232, and a camera head 1202 connected to the proximal end of the lens barrel 1201. In the example shown in Fig. 38, the endoscope 1200 formed as a so-called hard mirror including the hard lens barrel 1201 is shown but the endoscope 1200 may be formed as a so-called soft mirror including a soft lens barrel.

An opening in which an objective lens is fitted is provided at the distal end of the lens barrel 1201. A light source apparatus 1203 is connected to the endoscope 1200, and light generated by the light source apparatus 1203 is guided to the distal end of the lens barrel 1201 by a light guide extended inside the lens barrel 1201, and is emitted to an observation target in the body cavity of the patient 1232 via the objective lens. Note that the endoscope 1200 may be a forward-viewing endoscope or may be a forward-oblique viewing endoscope or side-viewing endoscope.

An optical system and a photoelectric conversion apparatus are provided in the camera head 1202, and reflected light (observation light) from the observation target is condensed by the optical system to the photoelectric conversion apparatus. The observation light is photoelectrically converted by the photoelectric conversion apparatus to generate an electrical signal corresponding to the observation light, that is, an image signal corresponding to an observation image. As the photoelectric conversion apparatus, the above-described photoelectric conversion apparatus 1000 can be used. The image signal is transmitted as RAW data to a Camera Control Unit (CCU) 1235.

The CCU 1235 is formed by a Central Processing Unit (CPU), a Graphics Processing Unit (GPU), and the like, and comprehensively controls the operations of the endoscope 1200 and a display apparatus 1236. Furthermore, the CCU 1235 receives an image signal from the camera head 1202, and performs, for the image signal, various kinds of image processes such as development processing (demosaic processing) for displaying an image based on the image signal.

Under the control of the CCU 1235, the display apparatus 1236 displays the image based on the image signal having undergone the image processing by the CCU 1235.

The light source apparatus 1203 is formed from a light source such as a Light Emitting Diode (LED), and supplies, to the endoscope 1200, irradiation light at the time of imaging an operation portion or the like.

An input apparatus 1237 is an input interface to the endoscopic surgery system 1250. The user can input various kinds of information or instructions to the endoscopic surgery system 1250 via the input apparatus 1237.

A treatment tool control apparatus 1238 controls driving of an energy treatment tool 1212 for ablation or incision of the tissue, sealing of a blood vessel, or the like.

The light source apparatus 1203 that supplies, to the endoscope 1200, irradiation light at the time of imaging an operation portion can be formed from, for example, a white light source formed by an LED, a laser light source, or a combination thereof. If the white light source is formed by a combination of RGB laser light sources, it is possible to accurately control the output intensity and output timing of each color (each wavelength), and thus the light source apparatus 1203 can adjust the white balance of a captured image. In this case, the observation target is time-divisionally irradiated with laser beams from the RGB laser light sources, respectively, and driving of the image sensor of the camera head 1202 is controlled in synchronism with the irradiation timings, thereby making it possible to time-divisionally capture images respectively corresponding to R, G, and B. In this method, it is possible to obtain a color image without providing color filters in the image sensor.

Driving of the light source apparatus 1203 may be controlled to change the intensity of light to be output for every predetermined time. It is possible to time-divisionally acquire images by controlling driving of the image sensor of the camera head 1202 in synchronism with the timing of changing the intensity of the light, and combine the images, thereby generating an image of a high dynamic range without so-called shadow detail loss or highlight detail loss.

The light source apparatus 1203 may be configured to supply light in a predetermined wavelength band corresponding to special light observation. In special light observation, for example, the wavelength dependency of light absorption in the body tissue is used. More specifically, by performing irradiation with light in a narrow band, as compared with irradiation light (that is, white light) at the time of normal observation, predetermined tissue such as a blood vessel in the mucous membrane surface layer is captured with high contrast. Alternatively, in special light observation, fluorescence observation for obtaining an image by using fluorescence generated by performing radiation with excitation light may be performed. In fluorescence observation, it is possible to, for example, irradiate body tissue with excitation light and observe fluorescence from the body tissue, or locally inject a reagent such as indocyanine green (ICG) to body tissue while irradiating the body tissue with excitation light corresponding to the fluorescence wavelength of the reagent, thereby obtaining a fluorescence image. The light source apparatus 1203 can be configured to supply narrow band light and/or excitation light corresponding to such special light observation.

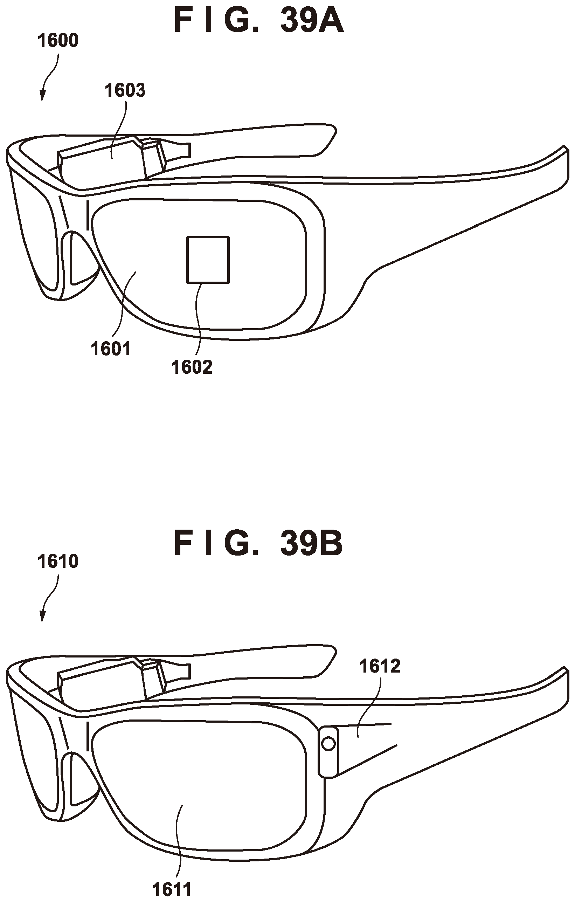

Fig. 39A describes glasses 1600 (smartglasses) as the photoelectric conversion system. The glasses 1600 include a photoelectric conversion apparatus 1602. The photoelectric conversion apparatus 1602 is the photoelectric conversion apparatus 1000 described in each of the above embodiments. A display apparatus including the light emitting apparatus such as an OLED or LED may be provided on the back surface side of a lens 1601. One or a plurality of photoelectric conversion apparatuses 1602 may be provided. Alternatively, a plurality of kinds of photoelectric conversion apparatuses may be used in combination. The arrangement position of the photoelectric conversion apparatus 1602 is not limited to that shown in Fig. 39A.

The glasses 1600 further include a control apparatus 1603. The control apparatus 1603 functions as a power supply that supplies electric power to the photoelectric conversion apparatus 1602 and the above-described display apparatus. In addition, the control apparatus 1603 controls the operations of the photoelectric conversion apparatus 1602 and the display apparatus. An optical system configured to condense light to the photoelectric conversion apparatus 1602 is formed on the lens 1601.

Fig. 39B describes glasses 1610 (smartglasses) according to an application example. The glasses 1610 include a control apparatus 1612, and a photoelectric conversion apparatus corresponding to the photoelectric conversion apparatus 1602 and a display apparatus are mounted on the control apparatus 1612. The photoelectric conversion apparatus in the control apparatus 1612 and an optical system configured to project light emitted from the display apparatus are formed in a lens 1611, and an image is projected to the lens 1611. The control apparatus 1612 functions as a power supply that supplies electric power to the photoelectric conversion apparatus and the display apparatus, and controls the operations of the photoelectric conversion apparatus and the display apparatus. The control apparatus may include a line-of-sight detector that detects the line of sight of a wearer. The detection of a line of sight may be done using infrared rays. An infrared ray emitter emits infrared rays to an eyeball of the user who is gazing at a displayed image. An image capturing unit including a light receiving element detects reflected light of the emitted infrared rays from the eyeball, thereby obtaining a captured image of the eyeball. A reducer for reducing light from the infrared ray emitter to the display unit in a plan view is provided, thereby reducing deterioration of image quality.

The line of sight of the user to the displayed image is detected from the captured image of the eyeball obtained by capturing the infrared rays. An arbitrary known method can be applied to the line-of-sight detection using the captured image of the eyeball. As an example, a line-of-sight detection method based on a Purkinje image obtained by reflection of irradiation light by a cornea can be used.

More specifically, line-of-sight detection processing based on pupil center corneal reflection is performed. Using pupil center corneal reflection, a line-of-sight vector representing the direction (rotation angle) of the eyeball is calculated based on the image of the pupil and the Purkinje image included in the captured image of the eyeball, thereby detecting the line-of-sight of the user.

The display apparatus according to this application example can include a photoelectric conversion apparatus including a light receiving element, and control a displayed image of the display apparatus based on the line-of-sight information of the user from the photoelectric conversion apparatus.

More specifically, the display apparatus decides a first visual field region at which the user is gazing and a second visual field region other than the first visual field region based on the line-of-sight information. The first visual field region and the second visual field region may be decided by the control apparatus of the display apparatus, or those decided by an external control apparatus may be received. In the display region of the display apparatus, the display resolution of the first visual field region may be controlled to be higher than the display resolution of the second visual field region. That is, the resolution of the second visual field region may be lower than that of the first visual field region.

In addition, the display region includes a first display region and a second display region different from the first display region, and a region of higher priority may be decided from the first display region and the second display region based on line-of-sight information. The first visual field region and the second visual field region may be decided by the control apparatus of the display apparatus, or those decided by an external control apparatus may be received. The resolution of the region of higher priority may be controlled to be higher than the resolution of the region other than the region of higher priority. That is, the resolution of the region of relatively low priority may be low.

Note that AI may be used to decide the first visual field region or the region of higher priority. The Al may be a model configured to estimate the angle of the line of sight and the distance to a target object ahead the line of sight from the image of the eyeball using the image of the eyeball and the direction of actual viewing of the eyeball in the image as supervised data. The Al program may be held by the display apparatus, the photoelectric conversion apparatus, or an external apparatus. If the external apparatus holds the Al program, it is transmitted to the display apparatus via communication.

When performing display control based on line-of-sight detection, smartglasses further including a photoelectric conversion apparatus configured to capture the image of the outside can be applied. The smartglasses can display the captured outside image information in real time.

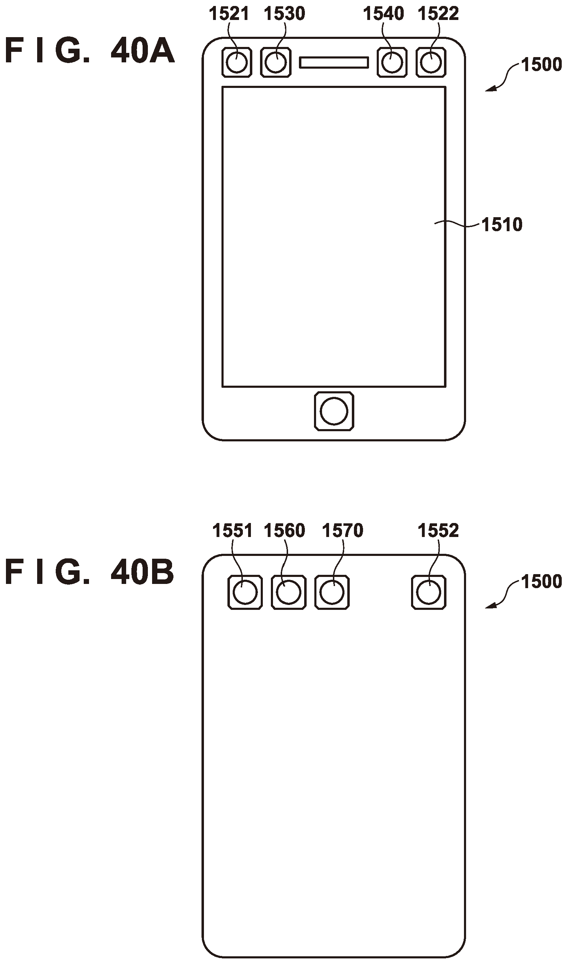

The above-described photoelectric conversion apparatus and photoelectric conversion system may be applied to, for example, electronic equipment such as a so-called smartphone or tablet. Figs. 40A and 40B are views showing an example of electronic equipment 1500 on which the photoelectric conversion apparatus is mounted. Fig. 40A shows the front surface side of the electronic equipment 1500, and Fig. 40B shows the back surface side of the electronic equipment 1500.

As shown in Fig. 40A, a display 1510 that displays an image is arranged at the center of the front surface of the electronic equipment 1500. Then, front cameras 1521 and 1522 for each of which the above-described photoelectric conversion apparatus 1000 is used, an IR light source 1530 that emits infrared rays, and a visible light source 1540 that emits visible light are arranged along the upper side of the front surface of the electronic equipment 1500.

As shown in Fig. 40B, rear cameras 1551 and 1552 for each of which the above-described photoelectric conversion apparatus 1000 is used, an IR light source 1560 that emits infrared rays, and a visible light source 1570 that emits visible light are arranged along the upper side of the back surface of the electronic equipment 1500.

By applying the above-described photoelectric conversion apparatus 1000, the electronic equipment 1500 having the above configuration can capture, for example, an image of higher quality. Note that the photoelectric conversion apparatus can be applied to electronic equipment such as an infrared sensor, a ranging sensor using an active infrared source, a security camera, or a personal or biometric authentication camera. This can improve the accuracy and performance of the electronic equipment.

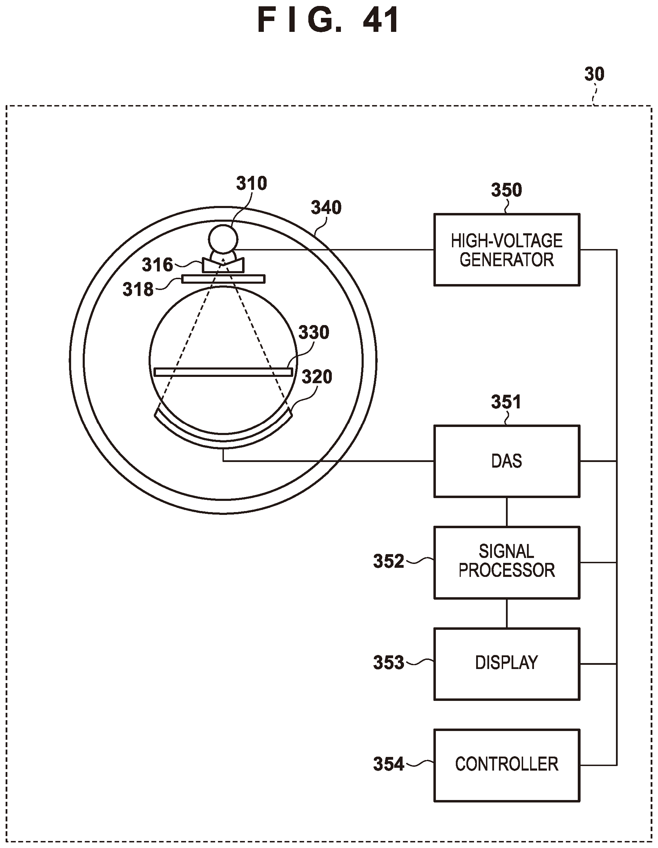

Fig. 41 is a block diagram of an X-ray CT apparatus. The above-described photoelectric conversion apparatus 1000 is applicable to a detector of the X-ray CT apparatus. An X-ray CT apparatus 30 according to this application example includes an X-ray generator 310, a wedge 316, a collimator 318, an X-ray detector 320, a top plate 330, a rotating frame 340, and a high-voltage generation apparatus 350. The X-ray CT apparatus 30 also includes a Data Acquisition System (DAS) 351, a signal processor 352, a display unit 353, and a controller 354.

The X-ray generator 310 is formed from, for example, a vacuum tube that generates X-rays. The vacuum tube of the X-ray generator 310 is supplied with a filament current and a high voltage from the high-voltage generation device 350. When thermoelectrons are emitted from a cathode (filament) to an anode (target), X-rays are generated.

The wedge 316 is a filter that adjusts the amount of X-rays emitted from the X-ray generator 310. The wedge 316 attenuates the amount of X-rays so that the X-rays emitted from the X-ray generator 310 to a subject has a predetermined distribution. The collimator 318 is formed from a lead plate that narrows the irradiation range of the X-rays having passed through the wedge 316. The X-rays generated by the X-ray generator 310 is formed in a cone beam shape via the collimator 318, and the subject on the top plate 330 is irradiated with the X-rays.

The X-ray detector 320 is formed using the above-described photoelectric conversion apparatus 1000. The X-ray detector 320 detects the X-rays having passed through the subject from the X-ray generator 310, and outputs a signal corresponding to the amount of the X-rays to the DAS 351.

The rotating frame 340 is annular, and is configured to be rotatable. The X-ray generator 310 (the wedge 316 and the collimator 318) and the X-ray detector 320 are arranged to face each other in the rotating frame 340. The X-ray generator 310 and the X-ray detector 320 can rotate together with the rotating frame 340.

The high-voltage generation device 350 includes a boosting circuit, and outputs a high voltage to the X-ray generator 310. The DAS 351 includes an amplification circuit and an A/D conversion circuit, and outputs, as digital data, a signal from the X-ray detector 320 to the signal processor 352.

The signal processor 352 includes a Central Processing Unit (CPU), a Read Only Memory (ROM), and a Random Access Memory (RAM), and can execute image processing and the like for the digital data. The display unit 353 includes a flat display apparatus or the like, and can display an X-ray image. The controller 354 includes a CPU, a ROM, a RAM, and the like, and controls the operation of the overall X-ray CT apparatus 30.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

According to the present disclosure, it is possible to provide a technique advantageous in correcting image noise.

Various embodiments have been described in detail above but it will be understood that the present disclosure is not limited to these embodiments and encompasses all modifications, variants, alternatives and equivalents falling within the scope of the appended claims.

## Claims

1. A photoelectric conversion apparatus (1000) comprising a plurality of pixels (101) each including an avalanche photodiode (201), a timing controller (TC), and processor (1007),
**characterized in that**
the timing controller (TC) is configured to generate, in a plurality of sub-frame periods forming each frame period, a plurality of pulse signals defining a plurality of detection periods forming each sub-frame period and a readout signal for reading out signals from the plurality of pixels (101),
each of the plurality of pixels (101) includes a counting unit (520) configured to, in each sub-frame period, count the number of pulse signals after first detection of a photon among the plurality of pulse signals, and perform integration for each frame period,
the timing controller (TC) is configured to be able to supply the readout signal at an end of each sub-frame period, and a count result of counting by the counting unit (520) is read out to the processor (1007) in accordance with the readout signal, and
the processor (1007) is configured to perform correction processing for an image signal based on the count result and change a method of the correction processing in accordance with at least one of a generation timing of each of the plurality of pulse signals in each sub-frame period and a period length, in each frame period, from a start of the frame period to the sub-frame period in which the count result is read out.

2. The photoelectric conversion apparatus according to claim 1, **characterized in that**
the correction processing includes gain adjustment, and
the processor is configured to change a largest magnification of the gain adjustment in accordance with at least one of the generation timing and the period length.

3. The photoelectric conversion apparatus according to claim 2, **characterized in that**
in a case where the period length is a first length, the processor is configured to set the largest magnification of the gain adjustment to be lower than in a case of a second length longer than the first length.

4. The photoelectric conversion apparatus according to claim 2 or 3, **characterized in that**
the timing controller is configured to be operable in a plurality of pulse signal generation modes with different generation timings, including a first pulse signal generation mode and a second pulse signal generation mode in which tonality of low luminance is higher than in the first pulse signal generation mode, and
in a case where the timing controller operates in the first pulse signal generation mode, the processor is configured to set the largest magnification of the gain adjustment to be lower than in a case where the timing controller operates in the second pulse signal generation mode.

5. The photoelectric conversion apparatus according to any one of claims 1 to 4,
**characterized in that**
the correction processing includes white balance adjustment, and
the processor is configured to change a reference pixel to be referred to for the white balance adjustment among the plurality of pixels in accordance with at least one of the generation timing and the period length.

6. The photoelectric conversion apparatus according to claim 5, **characterized in that**
the processor is configured to
select, among the plurality of pixels, a pixel whose image signal is not less than a predetermined threshold as the reference pixel, and
in a case where the period length is a first length, set the threshold to be higher than in a case of a second length longer than the first length.

7. The photoelectric conversion apparatus according to claim 5 or 6, **characterized in that**
the timing controller is configured to be operable in a plurality of pulse signal generation modes with different generation timings, including a first pulse signal generation mode and a second pulse signal generation mode in which tonality of low luminance is higher than in the first pulse signal generation mode, and
the processor is configured to
select, among the plurality of pixels, a pixel whose image signal is not less than a predetermined threshold as the reference pixel, and
in a case where the timing controller operates in the first pulse signal generation mode, set the threshold to be higher than in a case where the timing controller operates in the second pulse signal generation mode.

8. The photoelectric conversion apparatus according to any one of claims 1 to 7,
**characterized in that**
the correction processing includes noise correction, and
the processor is configured to change a correction strength of the noise correction in accordance with at least one of the generation timing and the period length.

9. The photoelectric conversion apparatus according to claim 8, **characterized in that**
the noise correction is performed based on at least one of the image signal of a peripheral pixel arranged around a correction target pixel among the plurality of pixels and the image signal of the correction target pixel in a different frame period,
change of the correction strength includes at least one of change of the number of peripheral pixels, change of a coefficient applied to the peripheral pixel, and change of the number of different frame periods, and
the correction strength is increased in a case where the number of peripheral pixel increases, in a case where the coefficient applied to the peripheral pixel becomes high, and in a case where the number of different frame periods increases.

10. The photoelectric conversion apparatus according to claim 8 or 9, **characterized in that**
in a case where the period length is a first length, the processor is configured to set the correction strength to be higher than in a case of a second length longer than the first length.

11. The photoelectric conversion apparatus according to any one of claims 8 to 10,
**characterized in that**
the timing controller is configured to be operable in a plurality of pulse signal generation modes with different generation timings, including a first pulse signal generation mode and a second pulse signal generation mode in which tonality of low luminance is higher than in the first pulse signal generation mode, and
in a case where the timing controller operates in the first pulse signal generation mode, the processor is configured to set the correction strength to be higher than in a case where the timing controller operates in the second pulse signal generation mode.

12. The photoelectric conversion apparatus according to any one of claims 1 to 11,
**characterized in that**
the correction processing includes gamma correction, and
the processor is configured to changes a conversion magnification of the gamma correction in accordance with at least one of the generation timing and the period length.

13. The photoelectric conversion apparatus according to claim 12, **characterized in that**
in a case where the period length is a first length, the processor is configured to set, at least in a partial range where an input luminance is lower than a predetermined threshold, the conversion magnification to be smaller than in a case of a second length longer than the first length.

14. The photoelectric conversion apparatus according to claim 12 or 13, **characterized in that**
the timing controller is configured to be operable in a plurality of pulse signal generation modes with different generation timings, including a first pulse signal generation mode and a second pulse signal generation mode in which tonality of low luminance is higher than in the first pulse signal generation mode, and
in a case where the timing controller operates in the first pulse signal generation mode, the processor is configured to set, at least in a partial range where an input luminance is lower than a predetermined threshold, the conversion magnification to be smaller than in a case where the timing controller operates in the second pulse signal generation mode.

15. A control method of a photoelectric conversion apparatus (1000) including a plurality of pixels (101) each including an avalanche photodiode (201), and a timing controller (TC),
**characterized in that**
the timing controller (TC) generates, in a plurality of sub-frame periods forming each frame period, a plurality of pulse signals defining a plurality of detection periods forming each sub-frame period and a readout signal for reading out signals from the plurality of pixels (101),
each of the plurality of pixels (101) includes a counting unit (520) configured to, in each sub-frame period, count the number of pulse signals after first detection of a photon among the plurality of pulse signals, and perform integration for each frame period,
the timing controller (TC) is configured to be able to supply the readout signal at an end of each sub-frame period, and a count result of counting by the counting unit (520) is read out to the processor in accordance with the readout signal,
the control method comprises performing correction processing for an image signal based on the count result, and
in the performing, a method of the correction processing is changed in accordance with at least one of a generation timing of each of the plurality of pulse signals in each sub-frame period and a period length, in each frame period, from a start of the frame period to the sub-frame period in which the count result is read out.
